# EUROPÄISCHE PATENTSCHRIFT

(11) **EP 2 389 409 B1**
(45) Veröffentlichungstag und Bekanntmachung des Hinweises auf die Patenterteilung: **28.09.2016**
(21) Anmeldenummer: 10709677.8
(22) Anmeldetag: 21.01.2010
(51) Int. Cl.: C08J 9/00

(54) **SCHAUMSTOFFELEMENT MIT DARIN EINGELAGERTEN HYDROPHILEN MITTELN**
FOAM ELEMENT HAVING HYDROPHILIC SUBSTANCE EMBEDDED THEREIN
ÉLÉMENT ALVÉOLAIRE CONTENANT DES MATIÈRES HYDROPHILES

(30) Priorität: 22.01.2009 AT 1012009; 22.10.2009 US 253949 P
(43) Veröffentlichungstag der Anmeldung: 30.11.2011
(73) Patentinhaber: Eurofoam GmbH, 4550 Kremsmünster (AT)
(72) Erfinder: MARCHGRABER, Manfred, A-4550 Kremsmünster (AT); SCHAUFLER, Franz, A-4550 Kremsmünster (AT)
(74) Vertreter: Burger, Hannes
(86) Internationale Anmeldenummer: PCT/AT2010/000021
(87) Internationale Veröffentlichungsnummer: WO 2010/083547

(56) Entgegenhaltungen:
- WO-A1-97/44183
- WO-A1-03/097345
- WO-A1-2007/135069
- WO-A2-2006/094977
- DE-A1- 10 116 757
- GB-A- 1 063 474

## Beschreibung

Die Erfindung betrifft ein Schaumstoffelement gemäß dem Oberbegriff des Anspruch 1. Schaumstoffe werden heute in vielen Bereichen des täglichen Lebens eingesetzt bzw. verwendet. In vielen dieser Anwendungen stehen die Schaumstoffe in Kontakt mit dem Körper, meist nur durch eine oder mehrere textile Zwischenschichten getrennt. Die meisten derartiger Schaumstoffe bestehen aus synthetischen Polymeren wie Polyurethan (PU), Polystyrol (PS), Synthesekautschuk usw., die grundsätzlich eine unzureichende Wasseraufnahmefähigkeit aufweisen. Insbesondere bei längerem Körperkontakt oder auch bei anstrengenden schweißtreibenden Tätigkeiten bildet sich aufgrund der hohen, nicht absorbierten Feuchte ein unangenehmes Körperklima aus. Es ist daher für die meisten Anwendungen erforderlich, solche Schaumstoffe hydrophil auszugestalten.

Dies kann wiederum auf unterschiedlichste Weise erzielt werden. Eine Möglichkeit besteht darin, wie dies beispielsweise aus der DE 199 30 526 A beschrieben ist, bereits das Schaumgerüst eines Polyurethan-Weichschaumstoffes hydrophil auszugestalten. Dies erfolgt durch die Umsetzung von mindestens einem Polyisozyanat mit mindestens einer Verbindung mit mindestens zwei mit Isozyanat reaktiven Verbindungen in Gegenwart von Sulfonsäuren, die eine oder mehrere Hydroxylgruppen tragen, und/oder deren Salze und/oder von mit Monoolen gestarteten Polyalkylenglykolethern erhältlich sind. Solche Schaumstoffe werden beispielsweise als Haushaltsschwamm oder für Hygieneartikel verwendet.

Eine weitere Möglichkeit wird in der DE 101 16 757 A1 beschrieben, bei der ein offenzelliger, hydrophiler aliphatischer Polymethan-Schaumstoff mit einer zusätzlichen eigenen Lage aus Zellulosefasern mit einem darin eingebetteten Hydrogel als Speichermittel verwendet wird.

Aus der EP 0 793 681 B1 bzw. der deutschen Übersetzung DE 695 10 953 T2 ist ein Verfahren zur Herstellung von Weichschäumen bekannt geworden, bei welchem so genannte superabsorbierende Polymere (SAPs), die auch als Hydrogele bezeichnet werden können, eingesetzt werden. Dabei können die verwendeten SAPs mit dem Vorpolymer vorgemischt werden, was das Verfahren sehr einfach für den Schaumhersteller macht. Derartige SAPs können ausgewählt werden aus mit Stärke oder Zellulose gepfropften SAPs unter Verwendung von z.B. Acrylnitril, Acrylsäure oder Acrylamid als ungesättigtes Monomer. Derartige SAPs werden beispielsweise von der Fa. Höchst/Cassella unter dem Namen SANWET IM7000 vertrieben.

In der WO 96/31555 A2 wird ein Schaumstoff mit zellularer Struktur beschrieben, wobei der Schaumstoff wiederum superabsorbierende Polymere (SAPs) enthält. Dabei kann das SAP aus einem synthetischen Polymer bzw. aber auch aus Zellulose gebildet sein. Der hier verwendete Schaumstoff dient dazu, Feuchtigkeit bzw. Flüssigkeiten zu absorbieren und diese im Schaumgerüst zurückzuhalten.

Aus der WO 2007/135069 A1 sind Schuhsohlen mit wasserabsorbierenden Eigenschaften bekannt geworden. Dabei werden schon vor dem Aufschäumen des Kunststoffes wasserabsorbierende Polymere zugesetzt. Derartige wasserabsorbierende Polymere werden üblicherweise durch Polymerisation einer wässrigen Monomerlösung und wahlweise einer anschließenden Zerkleinerung des Hydrogels erhalten. Das wasserabsorbierende Polymer bzw. das daraus gebildete getrocknete Hydrogel wird anschließend an seine Herstellung vorzugsweise gemahlen und gesiebt, wobei hier Partikelgrößen des gesiebten, getrockneten Hydrogels vorzugsweise unter 1000 µm und vorzugsweise über 10 µm Verwendung finden. Zusätzlich können auch noch zusätzlich zum Hydrogel Füllstoffe vor dem Aufschäumen eingemischt bzw. eingerührt werden, wobei hier als organische Füllstoffe beispielsweise Ruß, Melamin, Kollophonium sowie Zellulosefasern, Polyamid-, Polyacrylnitril-, Polyurethan-, Polyesterfasern auf der Grundlage von aromatischen und/oder aliphatischen Dicarbonsäureestern und Kohlenstofffasern Verwendung finden können. Dabei werden alle Stoffe getrennt voneinander in die Reaktionsmischung zur Herstellung des Schaumstoffelements hinein gegeben.

Die im Stand der Technik bekannten Schaumstoffe sind in ihren Eigenschaften derart ausgelegt, dass diese die von ihnen aufgenommene Feuchtigkeit über einen längeren Zeitraum speichern und zurückhalten. Die aufgenommene Feuchtigkeit bzw. das absorbierte Wasser wird erst nach einem Zeitraum von 24 Stunden wieder vollständig bezüglich der Feuchtigkeit der Umgebungsatmosphäre zum Ausgangszustand abgegeben, wie dies aus der WO 2007/135069 A1 zu entnehmen ist.

Diese Abgabegeschwindigkeit ist viel zu langsam für eine normale Gebrauchsweise wie beispielsweise von Matratzen, Schuhsohlen oder Fahrzeugsitzen, die pro Tag mehrere Stunden lang benutzt werden und daher wesentlich weniger als 24 Stunden Zeit zur Abgabe der aufgenommen Feuchtigkeit haben. Hierbei kann von einer so genannten Gleichgewichtsfeuchte gesprochen werden, wobei das jener Feuchtigkeitswert ist, bei dem der Schaum im Gleichgewicht mit der in der Umgebungsatmosphäre enthaltenen Feuchtigkeit ist.

Die GB 1063,474 offenbart Zellulose-II enthaltende Schäume mit guter Wasseraufnahmefähigkeit, die mit regenerierter Zellulose (Zellulose-II) imprägniert sind.

Der vorliegenden Erfindung liegt daher die Aufgabe zugrunde, ein Schaumstoffelement zu schaffen, das in seinem Feuchtemanagement eine hohe Aufnahmefähigkeit von Feuchtigkeit bei nachfolgender rascher Abgabegeschwindigkeit der aufgenommenen gespeicherten Feuchtigkeit aufweist. Diese Aufgabe der Erfindung wird durch die Merkmale des Anspruches 1 gelöst. Der sich durch die Merkmale des Anspruches 1 ergebende Vorteil liegt darin, dass dadurch nicht alle vom Schaumstoff gehaltenen Partikel von diesem vollständig umgeben sind und so eine bessere Kontaktmöglichkeit mit den Umgebungsbedingungen sowohl für die Feuchtigkeitsaufnahme als auch für die Feuchtigkeitsabgabe gegeben ist. Damit wird von dieser Teilmenge der Partikel eine relativ rasche und hohe Aufnahmekapazität für die aufzunehmende Feuchtigkeit bzw. Flüssigkeit geschaffen, wobei jedoch die aufgenommene Feuchtigkeit bzw. Flüssigkeit nach Beendigung der Belastung durch die Benutzung so rasch als möglich an die Umgebungsatmosphäre abgegeben wird, sodass die Gleichgewichtsfeuchte wiederum erreicht wird. Dadurch wird bei einer raschen Entfeuchtung eine neuerliche Benutzung kurzfristig ermöglicht.

Der sich durch die Merkmale des Anspruches 2 ergebende Vorteil liegt darin, dass trotz den im Schaumstoff angeordneten Partikeln eine für den jeweiligen Verwendungszweck günstige Stauchhärte erzielbar ist. Dadurch kann je nach Einsatzzweck des Schaumstoffelements bei vorbestimmbaren Stauchhärten trotzdem ein optimales Feuchtemanagement des gesamten Schaumstoffelements für den Benutzer sichergestellt werden. Durch den hohen Wert der Zwischenspeicherung an Feuchtigkeit bzw. Wasser, welche während der Benutzung im Schaumstoffelement aufgenommen wird, kann für den Benutzer ein angenehmes und trockenes Gefühl während des Benutzens sichergestellt werden. Dadurch kommt der Körper so nicht in direkten Kontakt mit der Feuchtigkeit.

Der sich durch die Merkmale des Anspruches 3 ergebende Vorteil liegt darin, dass so wiederum je nach Einsatzzweck des Schaumstoffelements trotz der zugesetzten und das hydrophile Mittel bildenden Partikel für unterschiedliche Einsatzzwecke eine ausreichende Elastizität und eine damit verbundene Abstützwirkung für den Benutzer des Schaumstoffelements geschaffen wird. So ist es möglich, innerhalb vorgegebener Grenzen den Benutzungskomfort bei gleichzeitigem ausreichendem Feuchtemanagement sicherzustellen.

Der sich durch die Merkmale des Anspruches 4 ergebende Vorteil liegt darin, dass so aufgrund der Erhöhung des Raumgewichts bzw. der Dichte in Verbindung mit den zugesetzten Partikeln zur Beeinflussung des Feuchtemanagements wiederum ausreichende Elastizitätswerte erreicht werden können. Dadurch ist es möglich, nicht nur eine sehr hohe Wasserdampfaufnahme bzw. die Aufnahme von Feuchtigkeit bei nachträglich rascher Abgabegeschwindigkeit zu erzielen, sondern auch die entsprechende Elastizität und die damit verbundene Abstützwirkung für den Benutzer komfortabel zu gestalten.

Durch die Zugabe der Zellulose zum Schaumgerüst ist es möglich, eine ausreichend hohe Aufnahmekapazität für Feuchtigkeit bzw. Flüssigkeit zu schaffen, wobei die aufgenommene Feuchtigkeit bzw. Flüssigkeit nach der Belastung durch die Benutzung so rasch als möglich wiederum an die Umgebungsatmosphäre abgegeben wird, sodass die Gleichgewichtsfeuchte rasch erreicht wird. Dadurch kann bei gutem Verwendungskomfort eine rasche Abgabe der im Schaumstoffelement aufgenommenen Feuchtigkeit erreicht werden. So ist es möglich, auch nach einer hohen Aufnahme von Feuchtigkeit bereits nach einer relativ kurzen Zeitspanne eine erneute Benutzung vornehmen zu können und dabei gleich ein getrocknetes Schaumstoffelement erneut zur Verfügung zu haben.

Vorteilhaft ist auch eine weitere Ausführungsform nach Anspruch 5, da so in Abhängigkeit vom hergestellten Schaumgerüst des Schaumstoffs die Faserlänge daraufhin abstimmbar ist, um so einen optimalen Feuchtigkeitstransport sowohl für die rasche Aufnahme als auch für die rasche Abgabe nach der Benutzung erzielen zu können.

Vorteilhaft ist weiters eine Ausbildung nach Anspruch 6, da so eine noch feinere Verteilung der Zellulosepartikel innerhalb des Schaumgerüsts erzielt werden kann und dadurch das Schaumstoffelement einfach an unterschiedlichste Einsatzzwecke angepasst werden kann.

Durch die Ausbildung nach Anspruch 7 ist es möglich, die Rieselfähigkeit der Partikel zu verbessern. Durch die nicht vollkommen glatte und unregelmäßige Oberflächenstruktur führt dies zu einer erhöhten spezifischen Oberfläche, welche zu einem ausgezeichneten Adsorptionsverhalten der Zellulosepartikel beiträgt.

Nach einer anderen Ausführungsvariante gemäß Anspruch 8 wird die Möglichkeit geschaffen, derartige Partikel auch bei der so genannten CO₂-Schäumung einsetzen zu können, ohne dass dabei die feinen Öffnungen in der Düsenplatte verlegt werden.

Durch die Weiterbildung nach Anspruch 10 wird erreicht, dass so die Aufnahme- und Abgabekapazität des Schaumstoffelements durch den zugesetzten Anteil an Zellulose einfach und unterschiedlichste Anwendungsfälle abgestimmt werden kann.

Durch die Ausbildung nach Anspruch 11 kann die Zellulose gleich während ihrer Herstellung mit zumindest einem zusätzlichen Zusatzstoff angereichert bzw. versetzt werden und so für die Zumischung in eine Reaktionskomponente lediglich ein einziger Zusatzstoff berücksichtigt werden muss.

Vorteilhaft ist auch eine weitere Ausführungsform nach Anspruch 12, da dadurch einfach herzustellende Partikel aus Naturmaterialien Verwendung finden können. Dadurch kann wiederum die Aufnahme sowie Abgabe der Feuchtigkeit des Schaumstoffelements an unterschiedlichste Einsatzbedingungen angepasst werden.

Vorteilhaft ist weiters eine Ausbildung nach Anspruch 13, da dadurch ein Naturmaterial eingesetzt werden kann und trotzdem eine Geruchsbelästigung unterbunden werden kann.

Durch die Ausbildung nach Anspruch 14 werden einerseits die Partikel zusätzlich mit einer Ummantelung umgeben, ohne dass dabei die Fähigkeit zur Aufnahme sowie Abgabe von Feuchtigkeit unterbunden wird. Dadurch kann ein zusätzlicher Schutz der Partikel innerhalb des Schaumstoffelements erzielt werden, wobei gerade im Bereich von Schnittkanten ein Zerfall der Partikel verzögert bzw. überhaupt verhindert werden kann.

Nach einer anderen Ausführungsvariante gemäß Anspruch 15 oder 16 wird eine gegenseitige Entmischung der Partikel in einem der Grundmaterialien zur Bildung des Schaumstoffs unterbunden, wodurch auch während dem Aufschäumvorgang eine gleichmäßige Verteilung der Partikel innerhalb des gesamten Schaumstoffelements sichergestellt wird. Dadurch kann über den gesamten Querschnitt des herzustellenden Schaumstoffelements eine nahezu gleichmäßige Verteilung der Partikel erzielt werden.

Durch die Weiterbildung nach Anspruch 17 wird durch den Zusatz eines Naturmittels eine positive Wirkung auf den Benutzer ausgeübt, wenn dieser mit dem Schaumstoffelement direkt oder indirekt in Kontakt kommt. Durch die zugesetzte Substanz, welche kostbare Wirkstoffe enthält, kann darüber hinaus auch noch eine heilende, pflegende, bzw. schützende Wirkung erzielt werden.

Durch die Ausbildung nach Anspruch 18 kann das Schaumstoffelement an unterschiedlichste Einsatzbedingungen einfach angepasst werden.

Vorteilhaft ist auch eine Ausbildung nach Anspruch 19, da so ein Schaumstoffelement geschaffen werden kann, welches in den unterschiedlichsten Einsatzfällen Anwendung finden kann.

Durch die Einbettung der Partikel innerhalb der Zellstruktur wird nicht nur im Randbereich der Zellwände bzw. Zellstege die Aufnahme von Feuchtigkeit durch die dort angeordneten Partikel geschaffen, sondern auch jener Raum der Schaumstruktur für das Feuchtemanagement herangezogen, der innerhalb der Zellwände bzw. Zellstege liegt. Dadurch ist es möglich, aufgenommene Feuchtigkeit von den im Randbereich angeordneten Partikeln auch ins Innere des Schaumgerüsts weiterleiten zu können. So kann das Aufnahmevermögen sowie die nachfolgende Abgabe an Feuchtigkeit noch zusätzlich erhöht werden.

Gemäß einer Ausbildung wie im Anspruch 20 beschrieben, wird ein noch besserer Feuchtetransport innerhalb des Schaumstoffelements erzielt.

Weiters ist aber auch die Verwendung des Schaumstoffelements für verschiedenste Einsatzzwecke vorteilhaft, da so nicht nur der Tragekomfort während der Benutzung verbessert werden kann, sondern die nachfolgende Trocknungszeit wesentlich rascher von statten geht. Dies ist gerade bei den unterschiedlichsten Sitzen, Matratzen sowie all jenen Benutzungsformen von Vorteil, bei welchen vom Körper Feuchtigkeit abgegeben wird.

Zum besseren Verständnis der Erfindung wird diese anhand der nachfolgenden Figuren näher erläutert.

Es zeigen jeweils in vereinfachter Darstellung:
- Fig. 1: ein erstes Diagramm, in dem von unterschiedlichen Probenstücken mit unterschiedlicher Provenentnahmestelle die Feuchtigkeitsaufnahme zwischen zwei vorgegebenen Klimas gezeigt sind;
- Fig. 2: ein zweites Diagramm, welches die unterschiedliche Feuchtigkeitsaufnahme von herkömmlichem Schaum und von mit Zellulosepartikeln versetzten Schaum zeigt;
- Fig. 3: ein drittes Diagramm, welches die unterschiedliche Feuchtigkeitsabgabe von herkömmlichem Schaum und von mit Zellulosepartikeln versetzten Schaum zeigt;
- Fig. 4: ein Balkendiagramm, welches die Wasserdampfaufnahme von herkömmlichem Kunststoffschaum und im Vergleich dazu von mit Zellulosepartikeln versetztem Kunststoffschaum zeigt;
- Fig. 5: ein Detail des Schaumstoffelements mit seinem Schaumgerüst, in vereinfachter vergrößerter Darstellung;
- Fig. 6: ein weiteres vergrößertes Detail eines Schaumgerüsts des Schaumstoffelements, in vereinfachter vergrößerter Darstellung;
- Fig. 7-15: verschiedene Anordnungsmöglichkeiten der Partikel im Schaumstoff des Schaumstoffelements bzw. der darauf aufgebrachten Beschichtung, in stark schematisch vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Zuerst sei auf das im Kunststoffschaum, insbesondere in dem daraus hergestellten Schaumstoffelement, eingelagerte hydrophile Mittel, welches beispielsweise durch Zellulose gebildet ist, näher eingegangen.

Es können aber auch noch andere hydrophile Mitte zugegeben werden. Dabei kann es sich beispielsweise um Superabsorbentien oder aber auch um Partikel aus den unterschiedlichsten Holzmaterialen handeln. Diese Werkstoffe können eine Partikelgröße kleiner 400 µm aufweisen. Werden Partikel aus Holzmaterialien verwendet, ist es vorteilhaft, wenn diese mit einem die Fäulnis hemmenden bzw. diese verhindernden Mittel beschichtet sind. Es wäre aber auch eine vollständige Tränkung möglich. Unabhängig davon wäre es aber auch noch möglich, die Partikel aus den Holzmaterialien in einem Extrusionsprozess mit einem Kunststoffmaterial zu ummanteln bzw. darin einzubetten und anschließend durch einen Zerkleinerungsvorgang wie Schreddern oder Mahlen auf die gewünschte Partikelgröße zu zerkleinern.

Damit wird das Schaumstoffelement aus dem Kunststoffschaum sowie dem darin eingelagerten hydrophilen Mittel gebildet. Der Kunststoffschaum seinerseits kann durch entsprechende Vermischung von miteinander aufschäumbaren Komponenten, die bevorzugt in flüssiger Form vorliegen, gebildet werden, wie dies bereits hinlänglich bekannt ist.

Wie bereits einleitend beschrieben, werden in der WO 2007/135 069 A1 zusätzlich zu den wasserabsorbierenden Polymeren als zusätzlicher Füllstoff Zellulosefasern angegeben. Diese sollen gegebenenfalls die mechanischen Eigenschaften des Schaumstoffes verstärken. Hier hat sich jedoch herausgestellt, dass die Zugabe faserförmiger Zusätze die Verarbeitung der aufzuschäumenden Ausgangsmischung erschwert, da sich deren Fließverhalten verändert. Beispielsweise würden fasrige Zellulosepartikel, die vor dem Schäumen insbesondere in die Polyol-Komponente eingemischt werden, dieses dickflüssiger machen, dass die Vermischung mit der weiteren Komponente, nämlich dem Isozyanat im Dosierkopf der Schäumungsanlage erschwert oder sogar behindert wird. Gleichfalls kann aber auch die Ausbreitung der Reaktionsmasse durch Fließen auf dem Transportband der Schäumungsanlage erschwert werden.

Darüber hinaus können sich die fasrigen Zellulosepartikel auch vermehrt als Ablagerung in den Transportzuleitungen für die Reaktionsmischung festsetzten.

Daher ist die Zugabe von faserförmigen Zusätzen nur in gewissen Grenzen möglich. Je geringer der mengenmäßige Anteil der faserförmigen Zusätze, insbesondere der zellulosischen Kurzschnittfasern, ist, desto geringer wird auch die Wasseraufnahmefähigkeit, wenn diese dem Schaumstoff zugesetzt sind. So ist auch bereits bei einem Zusatz von fasrigem Zellulosepulver in geringen Mengen mit einem Anstieg der Viskosität, insbesondere der Polyol-Komponente, zu rechnen. Derartige Mischungen sind zwar prinzipiell zu verarbeiten, wobei jedoch während der Verarbeitung auf die geänderte Viskosität bedacht zu nehmen ist.

Zellulose bzw. daraus hergestellte Fäden, Fasern oder Pulver werden größtenteils durch Aufarbeitung und Vermahlung von Zellstoff oder aber auch Holz und/oder Einjahrespflanzen erhalten, wie dies allgemein bekannt ist.

Je nach Aufwand bei der Herstellung werden Pulver unterschiedlicher Qualitäten (Reinheit, Größe, usw.) erhalten. Gemeinsam ist all diesen Pulvern, dass diese eine faserige Struktur aufweisen, da natürliche Zellulose in jeder Größenordnung die ausgeprägte Tendenz hat, solch faserige Strukturen zu bilden. Auch MCC (Mikrokristalline Zellulose), die als sphärisch beschrieben wird, setzt sich trotzdem aus kristallinen Faserbruchstücken zusammen.

Abhängig von der Mikrostruktur unterscheidet man verschiedene Strukturtypen der Zellulose, insbesondere Zellulose-I und Zellulose-II. Diese Unterschiede zwischen diesen beiden Strukturtypen sind in der Fachliteratur ausführlich beschrieben und können darüber hinaus röntgenographisch festgestellt werden.

Ein überwiegender Teil der Zellulosepulver bestehen aus Zellulose-I. Für die Herstellung und Anwendung von Zellulose-I-Pulvern gibt es eine große Anzahl von Schutzrechten. Dort sind zum Beispiel auch viele technische Details der Vermahlung geschützt. Die Zellulose-I-Pulver haben eine faserige Natur, was für eine Anzahl von Anwendungen nicht sehr vorteilhaft bzw. sogar hinderlich ist. So können faserige Pulver oftmals zu einem Verhaken der Fasern führen. Damit ist auch eine eingeschränkte Rieselfähigkeit verbunden.

Zellulose-Pulver auf der Basis Zellulose-II sind derzeit am Markt kaum zu finden. Derartige Zellulose-Pulver mit dieser Struktur können entweder aus Lösung (meist Viskose) oder durch Zerkleinerung von Zellulose-II Produkten erhalten werden. Ein derartiges Produkt wäre beispielsweise Cellophan. Weiters sind derart feine Pulver mit einer Korngröße von 10 µm und darunter ebenfalls nur in sehr geringen Mengen erhältlich.

Die Herstellung von sphärischen, nicht-fibrillären Zellulosepartikeln mit einer Partikelgröße im Bereich von 1 µm bis 400 µm kann beispielsweise aus einer Lösung von underivatisierter Zellulose in einer Mischung aus einer organischen Substanz und Wasser erfolgen. Die Partikelgröße kann auch bei allen anderen zugesetzten Partikel Anwendung finden. Dabei wird diese Lösung frei fließend unter ihre Erstarrungstemperatur abgekühlt und anschließend die erstarrte Zelluloselösung zerkleinert. Daraufhin wird das Lösungsmittel ausgewaschen und die zerkleinerten, ausgewaschenen Partikel getrocknet. Die nachfolgende Zerkleinerung erfolgt zumeist mittels einer Mühle.

Besonders vorteilhaft ist es, wenn bereits in die vorbereitete Zelluloselösung vor deren Abkühlung und dem nachfolgenden Erstarren zumindest einzelne der nachfolgend genannten Zusatzstoffe mit eingebracht werden. Dieser Zusatzstoff kann ausgewählt sein aus der Gruppe umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Ruß, Zeolithe, Aktivkohle, polymere Superabsorber oder Flammschutzmittel. Diese sind dann in den später hergestellten Zellulosepartikeln gleich mit enthalten. Die Zugabe kann dabei an beliebigen Stellen in der Lösungsherstellung, in jedem Fall aber noch vor dem Erstarren erfolgen. Dabei können 1 Gew.% bis 200 Gew.% Zusatzstoffe, bezogen auf die Zellulosemenge eingemischt werden. Es hat sich gezeigt, dass diese Zusatzstoffe während des Auswaschens nicht entfernt werden, sondern in den Zellulosepartikeln verbleiben und auch ihre Funktion weitgehend beibehalten. So kann man beispielsweise beim Einmischen von Aktivkohle feststellen, dass deren aktive Oberfläche, die zum Beispiel mit der BET-Methode messbar ist, auch im fertigen Partikel vollständig erhalten bleibt. Nicht nur die an der Oberfläche des Zellulosepartikels befindlichen Zusatzstoffe, sondern auch die im Inneren befindlichen sind damit weiterhin vollständig zugänglich. Dies ist als besonders wirtschaftlich anzusehen, da in die vorbereitete Zelluloselösung nur geringe Mengen an Zusatzstoffen zugegeben werden müssen.

Dies hat den Vorteil, dass dem Reaktionsgemisch zur Herstellung des Schaumstoffelements nur die Zellulosepartikel mit den bereits darin enthaltenen funktionellen Zusatzstoffen beizugegeben sind. Bei dem bislang bekannten getrennten Zumischen aller Zusatzstoffe im Einzelnen in die Reaktionsmischung braucht hier für die Auslegung der Schäumung nur eine Art von Zusatz berücksichtigt werden. Dadurch können unkontrollierbare Schwankungen in der Eigenschaft vieler verschiedener dieser Additive vermieden werden.

Durch dieses Vorgehen wird nun ein Zellulosepulver erhalten, welches aus Partikeln besteht, die eine Zellulose - II - Struktur aufweisen. Das Zellulosepulver weist eine Partikelgröße in einem Bereich mit einer unteren Grenze von 1 µm und einer oberen Grenze von 400 µm bei einer mittleren Partikelgröße x50 mit einer unteren Grenze von 4 µm und einer oberen Grenze von 250 µm bei einer monomodalen Partikelgrößenverteilung auf. Weiters weist das Zellulosepulver bzw. die Partikel eine annähernd sphärische Partikelform mit unregelmäßiger Oberfläche auf, wobei eine Kristallinität im Bereich mit einer unteren Grenze von 15 % und einer oberen Grenze von 45 % gemäß der Raman-Methode liegt. Weiters weisen die Partikel eine spezifische Oberfläche (N2-Adsorbtion, BET) mit einer unteren Grenze von 0,2 m²/g und einer oberen Grenze von 8 m²/g bei einer Schüttdichte mit einer unteren Grenze von 250 g/l und einer oberen Grenze von 750 g/l auf.

Die Zellulose-II-Struktur wird durch das Auflösen und Wiederausfällen der Zellulose erzielt und unterscheidet die vorliegenden Partikel insbesondere von den aus Zellulose ohne Auflösungsschritt hergestellten Partikeln.

Die Partikelgröße im zuvor beschriebenen Bereich mit einer unteren Grenze von 1 µm und einer oberen Grenze von 400 µm mit einer Partikelverteilung, die durch einen x50-Wert mit einer unteren Grenze von 4 µm, insbesondere 50 µm und einer oberen Grenze von 250 µm, insbesondere 100 µm charakterisiert wird, wird natürlich durch die Betriebsweise bei der Zerkleinerung durch Mahlen beeinflusst. Durch die besondere Herstellungsweise durch Erstarren einer frei fließenden Zelluloselösung und die dadurch hervorgerufenen mechanischen Eigenschaften der erstarrten Zellulosemasse, lässt sich diese Partikelverteilung jedoch besonders leicht erreichen. Eine unter Scherbelastung erstarrte Zelluloselösung würde unter gleichen Zerkleinerungsbedingungen andere, aber insbesondere fibrilläre Eigenschaften aufweisen.

Die Form der verwendeten Partikel ist annähernd sphärisch. Diese Partikel weisen ein Achsenverhältnis (1:d) in einer unteren Grenze von 0,5, insbesondere 1, und einer oberen Grenze von 5, insbesondere 2,5, auf. Diese haben eine unregelmäßige Oberfläche, zeigen im Mikroskop aber keine faserartigen Ausfransungen oder Fibrillen. Es handelt sich also keineswegs um Kugeln mit glatter Oberfläche. Eine derartige Form wäre aber für die beabsichtigten Anwendungen auch nicht besonders günstig.

Auch die Schüttdichte der hier beschriebenen Zellulosepulver, die zwischen einer unteren Grenze von 250 g/l und einer oberen Grenze von 750 g/l liegt, ist deutlich höher als die von vergleichbaren, fibrillären Partikeln aus dem Stand der Technik. Die Schüttdichte hat verfahrenstechnisch wesentliche Vorteile, da sie auch die Kompaktheit der hier beschriebenen Zellulosepulver und damit unter anderem eine bessere Rieselfähigkeit, Einmischbarkeit in verschiedenste Medien und problemlosere Lagerfähigkeit ausdrückt.

Zusammenfassend wird nochmals festgehalten, dass die erhaltenen Partikel aus Zellulosepulver aufgrund ihrer sphärischen Struktur eine verbesserte Rieselfähigkeit aufweisen und ein kaum strukturviskoses Verhalten zeigen. Die Charakterisierung der Partikel mittels der in der Industrie weit verbreiteten Particel-Sizing-Geräte ist ebenfalls aufgrund der sphärischen Gestalt einfacher und aussagekräftiger. Die nicht vollkommen glatte und unregelmäßige Oberflächenstruktur führt zu einer erhöhten spezifischen Oberfläche, welche zum erhöhten ausgezeichnetem Adsorbtionsverhalten der Pulver beiträgt.

Unabhängig davon wäre es aber auch möglich, ein reines Zellulosepulver bzw. daraus gebildete Partikel mit weiteren Zellulosepartikeln zu vermischen, welche zusätzlich in einer unteren Grenze von 1 Gew.% und einer oberen Grenze von 200 Gew.% bezogen auf die Zellulosemenge, inkorporierte Zusatzstoffe enthalten. Einzelne dieser Zusatzstoffe können wiederum aus der Gruppe umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Aktivkohle, polymere Superabsorber und Flammschutzmittel gewählt sein.

In Abhängigkeit vom verwendeten Schäumungsverfahren zur Herstellung des Schaumstoffes haben sich insbesondere bei der CO₂-Schäumung die sphärischen Zellulosepartikel gegenüber den bekannten faserigen Zellulosepartikeln als besonders vorteilhaft erwiesen. Die CO₂-Schäumung kann dabei beispielsweise nach dem Novaflex-Cardio-Verfahren oder ähnlichen Verfahren erfolgen, wobei hier besonders feine Öffnungen in den Düsenplatten verwendet werden. Grobe und faserige Partikel würden die Düsenöffnungen sofort verstopfen und weitere Probleme bereiten. Deshalb ist gerade bei diesem Schäumverfahren der hohe Feinheitsgrad der sphärischen Zellulosepartikel besonders vorteilhaft.

Das erfindungsgemäße Schaumstoffelement bzw. das Vorgehen zur Herstellung des Schaumstoffelements wird nun anhand von einigen Beispielen näher erläutert werden. Diese sind als mögliche Ausführungsformen der Erfindung zu verstehen, wobei die Erfindung keineswegs auf den Umfang dieser Beispiele eingeschränkt ist.

Die Feuchtigkeitsangaben in Gew.% beziehen sich auf die Masse bzw. das Gewicht des gesamten Schaumstoffelements (Kunststoffschaum, Zellulosepartikel und Wasser bzw. Feuchtigkeit).

### Beispiel 1:

Das herzustellende Schaumstoffelement kann aus einem Kunststoffschaum wie beispielsweise aus einem Polyurethan-Weichschaumstoff, gebildet sein, wobei hier wiederum die unterschiedlichsten Herstellungsmöglichkeiten und Verfahren Anwendung finden können. Derartige Schäume weisen zumeist eine offenzellige Schaumstruktur auf. Dies kann beispielsweise auf einer Schäummaschine "QFM" der Firma Hennecke erfolgen, wobei der Schaumstoff im Hochdruckdosierverfahren in einem kontinuierlichen Prozess erzeugt wird. Alle erforderlichen Komponenten werden rechnerunterstützt über gesteuerte Pumpen genau dosiert und nach dem Rührprinzip gemischt. Eine dieser Komponenten ist im gegenständlichen Fall das Polyol, welches mit den zuvor beschriebenen Zellulosepartikeln versetzt worden ist. Aufgrund der Zumischung der Zellulosepartikel zu der einen Reaktionskomponente Polyol sind noch verschiedene Anpassungen der Rezeptur wie des Wassers, der Katalysatoren, der Stabilisatoren sowie des TDI notwendig, um den Einfluss des beigemischten Zellulosepulvers für die Herstellung und der nachfolgend erzielten physikalischen Werte weitgehend zu neutralisieren.

Es wurde ein möglicher erfindungsgemäßer Schaum mit 7,5 Gew.-% sphärischer Cellulosepartikel hergestellt. Dazu wurde zunächst ein sphärisches Cellulose-Pulver hergestellt, welches in weiterer Folge einer Reaktionskomponente des herzustellenden Schaumstoffes zugesetzt wurde. Der mengenmäßige Anteil der Partikel, insbesondere der Zellulose, bezüglich der gesamten Masse des Schaumstoffs, insbesondere des Kunststoffschaums kann dabei in einer unteren Grenze von 0,1 Gew.%, insbesondere 5 Gew.%, und einer oberen Grenze von 35 Gew.%, insbesondere 20 Gew.% liegen.

### Beispiel 2 (Vergleichsbeispiel):

Zum Vergleich gegenüber dem Beispiel 1 wurde hier aus einem Kunststoffschaum ein Schaumstoffelement hergestellt, welches ohne die Zugabe des Zellulosepulvers bzw. der Zellulosepartikel hergestellt worden ist. Dabei kann es sich um einen Standardschaum, einen HR-Schaum bzw. einen Viskoseschaum handeln, welche jeweils in bekannter Rezeptur hergestellt und verschäumt worden sind.

Zuerst wurde versucht festzustellen, ob die zugesetzten Zellulosepartikel in allen Schichten des hergestellten Schaumstoffelements bezüglich der Höhe gleichmäßig verteilt sind. Dies wurde so durchgeführt, dass anhand der Wasseraufnahme des Schaumstoffes in einem Normklima bei 20 °C und 55 % r.F. sowie in einem weiteren standardisierten Klima bei 23 °C und 93 % r.F. eine so genannte Gleichgewichtsfeuchte ermittelt wurde. Dazu wurden in drei verschiedenen Höhen des in Beispiel 1 sowie Beispiel 2 hergestellten Schaumstoffblockes gleich große Probenstücke entnommen und jeweils die Wasseraufnahme in den beiden zuvor beschriebenen, standardisierten Klimas gemessen. Dabei bedeutet 1,0 m die obere Schicht des Schaumstoffblockes, 0,5 m die mittlere Schicht und 0,0 m die untere Schicht des Schaumstoffes zur Entnahme der Probenstücke aus dem mit den Zellulosepartikeln versetzten Kunststoffschaum. Die Gesamthöhe des Blockes betrug ca. 1 m. Als Vergleich diente der zellulosefreie Kunststoffschaum aus Beispiel 2.

**Tabelle 1:**

| Probe | Bsp. 1 Oben | Bsp. 1 Mitte | Bsp. 1 Unten | Bsp. 2 |
|---|---|---|---|---|
| Normklima | 1,6 % | 1,6 % | 1,5 % | 0,7 % |
| Körpergleichgewichtsfeuchte | 4,6 % | 4,7 % | 4,5 % | 2,5 % |

Wie aus den angegebenen Zahlenwerten zu ersehen ist, nimmt der mit den Zellulosepartikeln versetzte Schaum sowohl im Normklima als auch in dem weiteren standardisierten Klima mit der Körpergleichgewichtsfeuchte bezüglich des zellulosefreien Schaumstoffes wesentlich mehr Feuchtigkeit auf. Auch zeigt der unterschiedliche Entnahmeort der Probenstücke (oben, mitte, unten) eine relativ gute Übereinstimmung der Messergebnisse, wodurch auf eine homogene Verteilung der Zellulosepartikel im hergestellten Schaumstoffelement geschlossen werden kann.

Die nachfolgende Tabelle 2 zeigt die mechanischen Eigenschaften der beiden Schaumstoffe gemäß Beispiel 1 und Beispiel 2. Es ist deutlich zu erkennen, dass die mit Zellulosepartikel versetzte Schaumstofftype vergleichbare mechanische Eigenschaften wie der Schaumstoff ohne die zugesetzten Zellulosepartikeln aufweist. Das spricht für eine problemlose Verarbeitbarkeit der Reaktionskomponenten, insbesondere wenn in diesen die sphärischen Zellulosepartikel beigefügt sind.

**Tabelle 2:**

| | Schaumtype | | | |
|---|---|---|---|---|
| | **A** | **A** | **B** | **B** |
| **Pulveranteil** (Zellulosepartikel) | 0% | 10% | 0% | 7,50% |
| | | | | |
| Raumgewicht | 33,0 kg/m³ | 33,3 kg/m³ | 38,5 kg/m³ | 43,8 kg/m³ |
| Stauchhärte 40 % | 3,5 kPa | 2,3 kPa | 2,7 kPa | 3,0 kPa |
| Elastizität | 48 % | 36 % | 55 % | 50 % |
| Reißfestigkeit | 140 kPa | 100 kPa | 115 kPa | 106 kPa |
| Dehnung | 190 % | 160 % | 220 % | 190 % |
| wet compression set (22 Std./70 % Drück./50°C/95 % r.F.) | 6 % | 50 % | 6 % | 9 % |

Das Schaumstoffelement ohne zugesetzter Zellulosepartikel soll für beide angegebenen Schaumtypen folgende Sollwerte aufweisen:

| | Schaumtype | | | |
|---|---|---|---|---|
| | **A** | | **B** | |
| Raumgewicht | 33,0 kg/m³ | | 38,5 kg/m³ | |
| Stauchhärte 40 % | 3,4 kPa | | 2,7 kPa | |
| Elastizität | > 44 % | | > 45 % | |
| Reißfestigkeit | > 100 kPa | | > 100 kPa | |
| Dehnung | > 150 % | | > 150 % | |
| wet compression set (22 Std./70 % Drück./50°C/95 % r.F.) | <15 % | | < 15 % | |

Das durchschnittliche Raumgewicht bzw. die Dichte des gesamten Schaumstoffelements liegt hierbei in einem Bereich in einer unteren Grenze von 30 kg/m³ und einer oberen Grenze von 45 kg/m³.

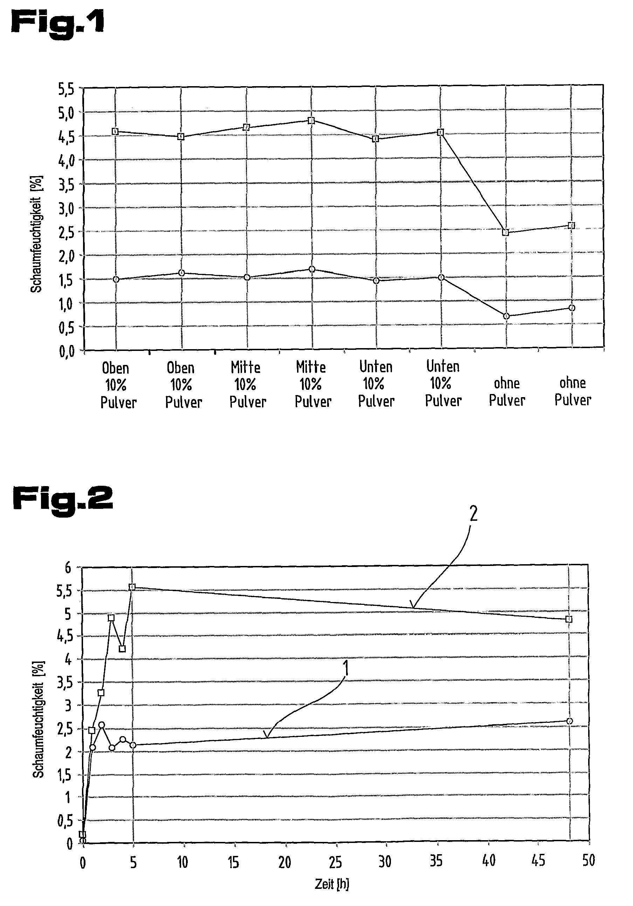

In der Fig. 1 ist die Schaumfeuchtigkeit in Prozent von gleichartigen Probenkörpern jedoch in unterschiedlicher Entnahmelage aus dem gesamten Schaumstoffelement gezeigt, wie dies bereits vorher beschrieben worden ist. Dabei ist die Schaumfeuchtigkeit in [%] auf der Ordinate aufgetragen. Der Anteil des zugesetzten Zellulosepulvers bzw. der Zellulosepartikel beträgt bei diesem Beispiel 10 Gew.% und bei den Zellulosepartikeln handelt es sich wiederum um die zuvor beschriebenen sphärischen Zellulosepartikel. Diese einzelnen unterschiedlichen Probenentnahmen mit und ohne Zusatz sind auf der Abszisse aufgetragen.

Die mit Kreisen dargestellten Messpunkte für die Schaumfeuchtigkeit der einzelnen Probenstücke stellen den Ausgangswert dar, wobei die in Quadraten dargestellten Messpunkte das gleiche Probenstück jedoch nach einem Tag der Feuchtigkeitsaufnahme zeigen. Die niedrigeren Ausgangswerte wurden bei dem zuvor beschriebenen Normklima ermittelt, wobei der weitere eingetragene Wert beim gleichen Probenstück die Feuchtigkeitsaufnahme im weiteren standardisierten Klima nach 24 Stunden bei 23°C und 93 % r.F. darstellt. Die Abkürzung r.F. steht für relative Feuchte bzw. Luftfeuchtigkeit und ist in % angegeben.

In der Fig. 2 ist der Verlauf der Feuchtigkeitsaufnahme über eine Zeitdauer von 48 Stunden gezeigt, wobei die Werte der Zeit (t) auf der Abszisse in [h] aufgetragen sind. Dabei ist der Ausgangszustand des Probenkörpers wiederum das zuvor definierte Normklima von 20 °C und 55 % r.F. Das weitere standardisierte Klima bei 23 °C und 93 % r.F. soll ein Benutzungsklima bzw. Körperklima darstellen, um so die Zeitspanne der Zunahme der Schaumfeuchtigkeit in Gew.% feststellen zu können. Die Werte der Schaumfeuchtigkeit sind auf der Ordinate in [%] aufgetragen.

So zeigt eine erste Diagrammlinie 1 mit den in Kreisen eingezeichneten Messpunkten ein Schaumstoffelement mit einer vorbestimmten Probengröße gemäß dem Beispiel 2 ohne zugesetzter Zellulosepartikel bzw. Zellulosepulver.

Eine weitere Diagrammlinie 2 mit als Quadrate dargestellte Messpunkte zeigt die Schaumfeuchtigkeit eines Schaumstoffelementes, welchem 7,5 Gew.% Zellulosepartikel bzw. Zellulosepulver zugesetzt worden sind. Bei den Zellulosepartikeln handelt es sich wiederum um die zuvor beschriebenen sphärischen Zellulosepartikel.

Der Verlauf der Feuchtigkeitsaufnahme über 48 Stunden zeigt, dass die Körpergleichgewichtsfeuchte "des Schaums" im "Körperklima" bereits nach kurzer Zeit erreicht ist. So kann man hier entnehmen, dass der mit den Zellulosepartikeln versetzte Schaumstoff innerhalb von 3 Stunden doppelt so viel Feuchtigkeit aufnehmen kann, wie ein Schaumstoff gemäß Beispiel 2 ohne zugesetzter Zellulosepartikel.

Die Messwerte für die Feuchtigkeitsaufnahme wurden durch Lagerung der Schaumstoffstücke bei einem Volumen von ca. 10 cm³ in einem Exsikkator mit eingestellter Luftfeuchte (über gesättigter KNO₃-Lösung und 93 % r.F.) nachdem die Proben zuvor getrocknet wurden. Nach definierten Zeiten wurden die einzelnen Proben dem Exsikkator entnommen und die Gewichtszunahme (=Wasseraufnahme) gemessen. Die Schwankungen der Feuchteaufnahme sind durch das Proben-Handling sowie leichte Inhomogenitäten der Proben zu erklären.

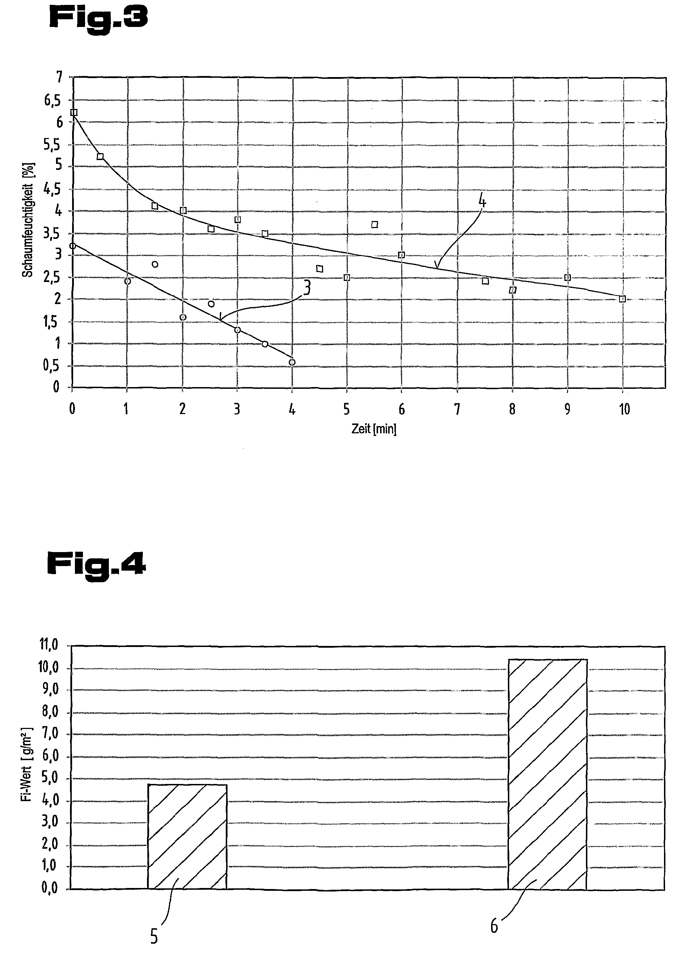

In der Fig. 3 ist das Trocknungsverhalten eines Schaumstoffelements mit zugesetzten Zellulosepartikeln nach Beispiel 1 im Vergleich zu einem Schaumstoff aus Beispiel 2 ohne derartige Zellulosepartikeln gezeigt. Zum Vergleich wurden beide Probenstücke zunächst 24 Stunden im "Körperklima" konditioniert. Dies wies wiederum bei 23 °C eine relative Feuchte von 93 % auf. Die Werte der Schaumfeuchtigkeit sind wiederum auf der Ordinate in [%] und die Zeit (t) in [min] auf der Abszisse aufgetragen. Die angegebenen %-Wert der Schaumfeuchtigkeit sind Gewichtsprozent bezogen auf die Masse bzw. das Gewicht des gesamten Schaumstoffelements (Kunststoffschaum, Zellulosepartikel und Wasser bzw. Feuchtigkeit).

Die in Kreisen dargestellten Messpunkte betreffen wiederum das Schaumstoffelement gemäß dem Beispiel 2 ohne zugesetzter Zellulosepartikel, wobei eine entsprechende Diagrammlinie 3 eingetragen worden ist, welche die Abnahme der Feuchtigkeit zeigt. Die Messpunkte, die als Quadrate dargestellt wurden, sind von dem Schaumstoffelement mit zugesetzten Zellulosepartikeln ermittelt worden. Eine entsprechende weitere Diagrammlinie 4 zeigt ebenfalls die rasche Feuchtigkeitsabnahme. Der Anteil der Zellulosepartikel betrug wiederum 7,5 Gew.%.

Hier wird deutlich, dass die Gleichgewichtsfeuchte von 2 % bereits nach ca. 10 Minuten wieder erreicht wird. Dies ist erheblich schneller als bei einem Schaumstoff gemäß dem Stand der Technik, bei welchem die Abgabe einer vergleichbaren Wassermenge mehrere Stunden dauert.

Wurde nun das mit den Zellulosepartikeln der Kristallmodifikation von Zellulose-II versetzte Schaumstoffelement über eine Zeitdauer von 24 Stunden im Körperklima" konditioniert und nachfolgend dem "Normklima" ausgesetzt, hat dieses im "Körperklima" zuerst einen Feuchtigkeitsgehalt von größer 5 Gew.% aufgenommen und innerhalb einer Zeitspanne von 2 min nach dem Einbringen ins "Normklima" den Feuchtigkeitsgehalt um zumindest zwei (2) Gew.% verringert.

Aus den beiden Diagrammen gemäß der Fig. 2 und 3 ist ersichtlich, dass das mit den Partikeln, insbesondere jenen aus Zellulose, versetzte Schaumstoffelement bei dem "Körperklima" bei 23 °C und der relativen Feuchte von 93 % eine Feuchtigkeitsaufnahmefähigkeit von größer 3,5 Gew.% aufweist und damit über jenem Wert des Schaumstoffelements ohne der zugesetzten Partikel liegt.

Dabei wäre es auch noch möglich, dem oder den Grundmaterialien zur Bildung des Kunststoffschaums Zusatzstoffe beizufügen, um die Feuchtigkeitsaufnahme des Kunststoffschaums selbst ohne die Partikel bereits weiter zu erhöhen. Dieser Zusatz wird zumeist der Komponente Polyol noch vor dem Verschäumen zugegeben bzw. darin eingemischt. Dies hat aber den Nachteil, dass dabei die Elastizität des hergestellten Kunststoffschaums bezüglich des gleichen Kunststoffschaums ohne dem Zusatzmittel sinkt bzw. geringer ist. Zur Erhöhung der Elastizität des Kunststoffschaums ist sein Raumgewicht zu erhöhen, wodurch die Elastizität wieder ansteigt. Dabei ist das Raumgewicht bzw. die Dichte größer als 45 kg/m³ zu wählen. Gleiches gilt aber auch für Kunststoffschäume mit den zugesetzten Partikeln, auch wenn den Grundmaterialien zur Bildung des Kunststoffschaums keine Zusatzstoffe zur Erhöhung der Feuchtigkeitsaufnahme beigefügt worden sind.

So kann man bei einem Kunststoffschaum ohne dem zugesetzten hydrophilen Mittel im "Körperklima" bei 23 °C und 93 % relativer Feuchte eine Feuchtigkeitsaufnahme von größer 2,8 Gew.% erzielen.

In der Fig. 4 ist in einem Balkendiagramm die Wasserdampfaufnahme "Fi" nach Hohenstein in [g/m²] dargestellt, wobei diese Werte auf der Ordinate aufgetragen sind. Der "Fi"-Wert gibt für einen Werkstoff eine Maßzahl an, welche seine Fähigkeit für die Aufnahmefähigkeit von Wasserdampf kennzeichnet. Der Fi Wert wird derart ermittelt, indem das Gewicht der Probe zu Messbeginn und Messende bestimmt wird und die Gewichtsdifferenz die Kurzzeitwasserdampfaufnahme darstellt.

Der Zeitraum, in welchem die Wasserdampfaufnahme ausgehend vom zuvor definierten Normklima von 20 °C und 55 % r.F. im ebenfalls zuvor beschriebenen standardisierten Klima bei 23 °C und 93 % r.F. (Benutzungsklima bzw. Körperklima) erfolgt ist, betrug für die beiden ermittelten Messwerte 3 (drei) Stunden. Bei den Probenkörpern handelt es sich jeweils um die zuvor beschriebene Schaumtype "B". So zeigt ein erster Diagrammbalken 5 den Schaumtyp "B" ohne zugesetzter Zellulose bzw. Zellulosepartikel. Der Messwert beträgt hier in etwa 4,8 g/m². Der mit der Zellulose versetzte Schaumkörper wies hingegen einen dazu höheren Wert von ca. 10,4 g/m² auf und ist dieser in einem weiteren Diagrammbalken 6 dargestellt. Damit liegt dieser weitere Wert über einem Wert von 5 g/m² nach Hohenstein.

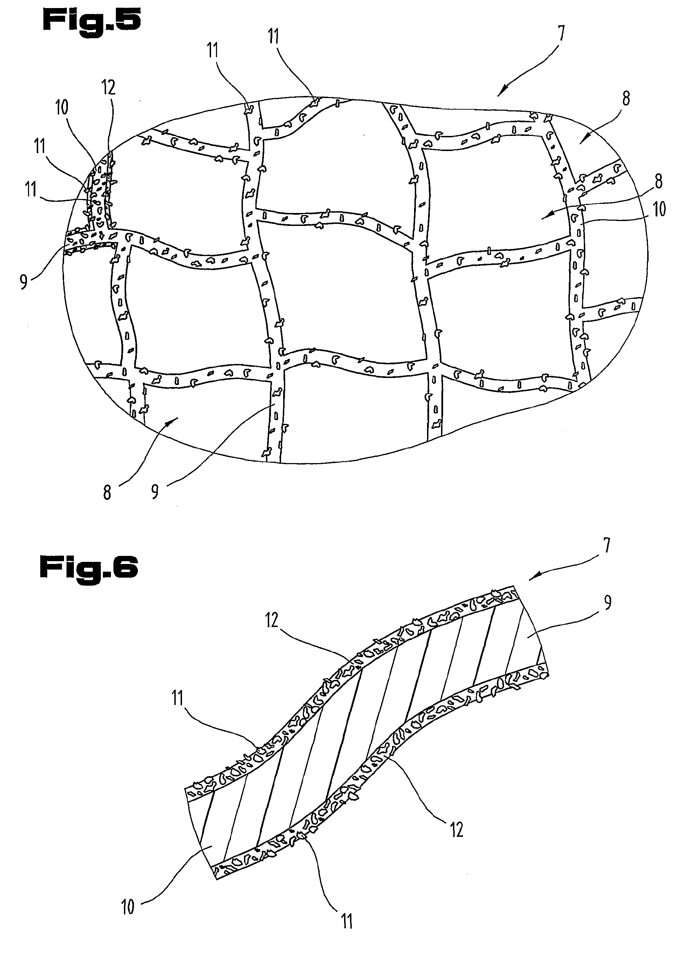

In den Fig. 5 und 6 ist vom Schaumstoffelement 7 ein vergrößertes Detail des diesen bildenden Schaumstoffs, insbesondere eines Kunststoffschaums gezeigt, wobei mehrere Zellen 8 vereinfacht schematisch dargestellt sind. Als Zelle 8 wird ein im Schaumstoffgerüst gebildeter kleiner Hohlraum verstanden, der von Zellwänden 9 und/oder Zellstegen 10 teilweise und/oder vollständig umschlossen ist. Sind die Zellwände 9 vollständig ausgebildet und umschließen diese den die Zelle 8 bildenden Hohlraum, kann von einer geschlossenzelligen Schaumstruktur gesprochen werden. Sind hingegen die Zellwände 9 bzw. Zellstege 10 nur teilweise ausgebildet, wird von einer offenzelligen Schaumstruktur gesprochen, wobei die einzelnen Zellen 8 miteinander in Strömungsverbindung stehen.

Weiters ist noch vereinfacht dargestellt, dass im Schaumstoff, insbesondere im Kunststoffschaum des Schaumstoffelements 7 die zuvor beschriebenen Partikel 11 angeordnet bzw. eingebettet sind. So ist es möglich, dass nur eine Teilmenge der Partikel 11 zum Teil im Kunststoffschaum des Schaumstoffelements 7 eingebettet ist. Dies bedeutet, dass diese Teilmengen der Partikel 11 nur zum Teil innerhalb des Kunststoffschaums angeordnet sind und diese über die Zellwand 9 bzw. den Zellsteg 10 in Richtung auf die den Hohlraum bildende Zelle 8 vorragen. Teilbereiche der Partikel 11 sind im Kunststoffschaum eingebettet. Eine weitere Teilmenge der Partikel 11 kann aber vollständig in die Zellstruktur des Kunststoffschaums eingebettet und somit von diesem vollständig umschlossen sein.

Im linken oberen Teil der Fig. 5 ist an einer der Zellwände 9 bzw. einem der Zellstege 10 vereinfacht dargestellt, dass das Kunststoffgerüst des Kunststoffschaums mit einer zusätzlichen Beschichtung 12 versehen bzw. an deren Oberfläche angeordnet ist. Diese Beschichtung 12 kann durch einen Tauch- bzw. Tränkvorgang oder aber auch andere Beschichtungsverfahren aufgebracht werden. Diese Beschichtung 12 soll eine hohe Feuchtigkeitsdurchlässigkeit aufweisen, wobei in dem die Beschichtung 12 bildenden Fluid ebenfalls die Partikel 11 angeordnet sein können. Dies kann dadurch erfolgen, dass beispielsweise im fließfähigen Zustand der Beschichtung 12 die Partikel 11 mit eingemischt und damit versetzt werden und während des Trocknungsvorganges eine Halterung bzw. Bindung der Partikel 11 über die Beschichtung 12 in Form eines Haftvorganges erfolgt.

Unabhängig davon ist es aber auch möglich, zumindest einen Teil der Partikel 11, zumeist jedoch alle Partikel 11, mit einer eigenen weiteren Beschichtung zu versehen, welche ihrerseits eine hohe Feuchtigkeits- bzw. Wasserdampfdurchlässigkeit aufweist.

Wie aus dem Detail der Fig. 6 zu ersehen ist, wäre es unabhängig davon aber auch möglich, in die Zellwand 9 bzw. den Zellsteg 10 keine der zuvor beschriebenen Partikel 11 anzuordnen, sondern ausschließlich die Partikel 11 in der vereinfacht angedeuteten Beschichtung 12 anzuordnen und dort für die gewünschte Feuchtigkeitsaufnahme ortsfest zu haltern. Dabei können die einzelnen Partikel 11 wiederum aus den zuvor beschriebenen unterschiedlichsten Werkstoffen gebildet sein, wobei hier auch eine beliebige Kombination der einzelnen Partikel 11 miteinander möglich ist. Diese beliebige Kombination der unterschiedlichen Partikel 11 miteinander ist aber auch für die Anordnung der Partikel 11 an bzw. in den Zellwänden 9 bzw. Zellstegen 10 möglich.

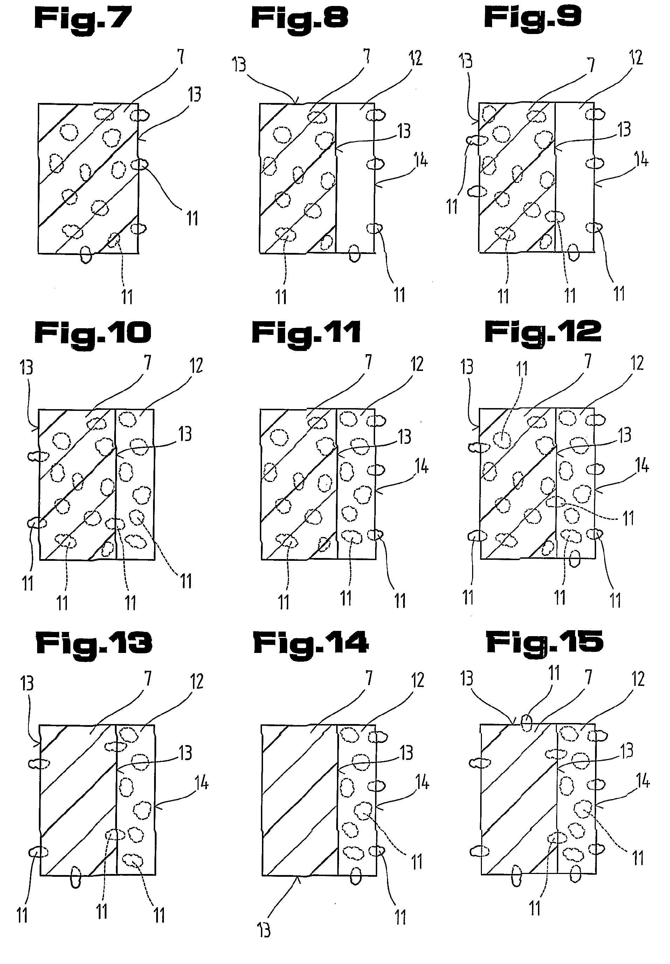

In den Fig. 7 bis 15 ist das Schaumstoffelement 7 vereinfacht dargestellt, wobei an dessen Oberfläche 13 zumindest bereichsweise die zuvor beschriebene Beschichtung 12 aufgebracht sein kann. Der Einfachheit sowie der besseren Übersichtlichkeit halber wurde auf die detaillierte Darstellung der Zellwände 8 bzw. Zellstege 9 hier verzichtet und das Schaumstoffelement 7 sowie die Beschichtung 12 jeweils als Block mit stark übertriebenen Maßverhältnissen dargestellt. Dies deshalb, um so die unterschiedlichen Anordnungsmöglichkeiten der Partikel 11 im oder am Schaumstoffelement 7 und/oder in oder an der Beschichtung 12 besser veranschaulichen zu können.

In der Fig. 7 ist das Schaumstoffelement 7 mit den darin eingelagerten und zuvor beschriebenen Partikeln 11 gezeigt, wobei ein Anteil bzw. eine Teilmenge der Partikel 11 vollständig innerhalb des Schaumstoffes und ein weiterer Anteil bzw. eine weitere Teilmenge der Partikel 11 über die Oberfläche 13 vorragend im Schaumstoff des Schaumstoffelements 7 angeordnet ist. Dabei ist ein Anteil bzw. eine Teilmenge der gesamten Partikel 11 im Bereich der Oberfläche 13 derart angeordnet, dass diese über die Oberfläche 13 vorragen, wobei ein Teilbereich bzw. Teilabschnitt dieser Partikel 11 noch im Schaumstoff eingebettet und so durch diesen gehalten und damit festgelegt ist. Unter dem Anteil bzw. der Teilmenge der Partikel 11 wird eine mengenmäßige bzw. stückzahlabhängige Mengenangabe derselben verstanden. Der Teilbereich bzw. der Teilabschnitt des Partikels 11 bezieht sich auf eine volumenmäßige Größenangabe eines einzelnen Partikels 11.

In der Fig. 8 ist ein weiteres Schaumstoffelement 7 gezeigt, welches mit der zuvor beschriebenen Beschichtung 12 versehen ist. Im Schaumstoffelement 7 sind die Partikel 11 alle vollständig darin eingebettet, wobei hier kein Partikel 11 über die Oberfläche 13 vorragend im Schaumstoff des Schaumstoffelementes 7 angeordnet ist. Die Beschichtung 12 ist ihrerseits ebenfalls mit den Partikeln 11 versetzt, wobei hier sämtliche Partikel 11 über eine Oberfläche 14 der Beschichtung 12 vorragen. So sind bei diesem Ausführungsbeispiel die Partikel 11 im Bereich der Oberfläche 14 der Beschichtung 12 angeordnet und überragen diese - je nach Einbettungsgrad mehr oder weniger und sind durch die Beschichtung 12 gehalten, da ein Teilabschnitt derselben noch in die Beschichtung 12 hineinragt.

In der Fig. 9 ist ein weiteres Schaumstoffelement 7 gezeigt, wobei dieses wiederum mit der Beschichtung 12 im Bereich zumindest einer ihrer Oberflächen 13 versehen ist. Hier ist ebenfalls ein Teil der Partikel 11 vollständig im Schaumstoff darin eingebettet, wobei ein Teil bzw. eine Teilmenge der Partikel 11 auch über die Oberfläche 13 des Schaumstoffes vorragt. Die Partikel 11 in der Beschichtung 12 sind hier alle ausschließlich im Bereich der Oberfläche 14 angeordnet und ragen über diese zumindest bereichsweise mehr oder weniger je nach Einbettungsgrad darüber vor. Im Kontaktbereich zwischen der Beschichtung 12 und dem Schaumstoff des Schaumstoffelements 7 ist bei einem Partikel 11 dargestellt, dass dieses sich ausgehend vom Schaumstoff auch noch in die Beschichtung 12 hinein erstrecken kann, da eine Teilmenge der Partikel 11 über die Oberfläche 13 des Schaumstoffes vorragend angeordnet ist.

In der Fig. 10 sind die Partikel 11 im Schaumstoff gleichartig angeordnet, wie dies bereits in der Fig. 9 beschrieben worden ist. So ist wiederum eine Teilmenge der Partikel 11 vollständig im Schaumstoff des Schaumstoffelementes 7 angeordnet, wobei eine Teilmenge der Partikel 11 wiederum über die Oberfläche 13 des Schaumstoffes vorragend angeordnet ist. Die Partikel 11 der Beschichtung 12 sind hier vollständig innerhalb der Beschichtung 12 angeordnet. Lediglich bei einem Partikel 11 ist gezeigt, dass dieses ausgehend von der Oberfläche 13 des Schaumstoffes 7 über die Oberfläche 13 vorragend angeordnet ist und so nach dem Aufbringen der Beschichtung 12 auch in diese hineinragt.

Bei dem in der Fig. 11 gezeigten Schaumstoffelement 7 sind alle Partikel 11 vollständig innerhalb des Schaumstoffs zur Bildung des Schaumstoffelementes 7 angeordnet. Die Partikel 11, welche in der Beschichtung 12 angeordnet sind weisen eine Teilmenge auf, welche vollständig innerhalb der Beschichtung 12 und weitere Teilmenge über die Oberfläche 14 vorragend angeordnet ist.

Bei dem in der Fig. 12 dargestellten Ausführungsbeispiel des Schaumstoffelements 7 sind einerseits die Partikel 11 vollständig im Schaumstoff darin eingebettet und andererseits ist eine Teilmenge über die Oberfläche 13 vorragend im Schaumstoff gehalten. Auch hier weist wiederum die Beschichtung 12 eine Teilmenge an Partikel 11 auf, welche vollständig innerhalb der Beschichtung 12 angeordnet ist. Eine weitere Teilmenge an Partikel 11 ragt über die Oberfläche 14 vor, wobei ein Teilabschnitt der Partikel 11 in der Beschichtung 12 eingebettet ist.

Bei dem in der Fig. 13 dargestellten Ausführungsbeispiel sind die Partikel 11 so im Schaumstoff angeordnet, dass diese ausschließlich die Oberfläche 13 bereichsweise überragen und ein Teilabschnitt dieser Partikel 11 im Schaumstoff eingebettet ist. Die Partikel 11, welche in der Beschichtung 12 enthalten sind, sind alle vollständig in dieser eingebettet. Lediglich ist wiederum bei einem der Partikel 11 gezeigt, dass dieses ausgehend von der Oberfläche 13 des Schaumstoffs in die Beschichtung 12 hinein vorragen kann.

Bei dem in der Fig. 14 dargestellten Ausführungsbeispiel sind im Schaumstoff keinerlei der zuvor beschriebenen Partikel 11 enthalten. Die Beschichtung 12 ihrerseits enthält sowohl eine Teilmenge an Partikel 11, welche vollständig innerhalb der Beschichtung 12 angeordnet sind und eine weitere Teilmenge, welche die Oberfläche 14 bereichsweise überragen.

Schließlich ist bei dem in der Fig. 15 dargestellten Ausführungsbeispiel gezeigt, dass die im Schaumstoff enthaltenen Partikel 11 ausschließlich die Oberfläche 13 überragen und ein Teilabschnitt dieser Partikel 11 im Schaumstoff angeordnet ist. Vollständig darin eingebettete Partikel 11 sind hier nicht vorgesehen. Die Beschichtung 12 enthält sowohl eine Teilmenge an Partikel 11 welche vollständig in der Beschichtung 12 eingebettet ist und eine weitere Teilmenge an Partikel 11, welche die Oberfläche 14 je nach Einbettungsgrad mehr oder weniger überragen. Im Kontaktbereich zwischen dem Schaumstoff und der Beschichtung 12 sind wiederum Partikel 11 dargestellt, welche über die Oberfläche 13 des Schaumstoffs des Schaumstoffelements 7 vorragen und so in die Beschichtung 12 hinein ragen.

Das Schaumstoffelement wird aus einem Kunststoffschaum gebildet, wobei als bevorzugter Schaumstoff ein PU-Schaum verwendet wird. Wie zuvor bei den einzelnen Diagrammen erläutert, wird für die Bestimmung der Feuchtigkeitsaufnahme von einer so genannten Gleichgewichtsfeuchte ausgegangen, welche ein "Normklima" darstellt und bei 20°C eine relative Feuchte von 55 % aufweist. Für die Simulation der Benutzung wurde ein weiteres, standardisiertes Klima definiert, welches bei 23°C eine relative Feuchte von 93 % aufweist. Dieses weitere standardisierte Klima soll beispielsweise die Feuchtigkeitseinbringung während der Benutzung durch einen Schweiß absondernden Körper eines Lebewesens, insbesondere eines Menschen, darstellen. Dazu soll die im Schaumstoffelement eingelagerte Zellulose während der Benutzung die aufgenommene Feuchtigkeit nach Beendigung der Benutzung über einen Zeitraum in einem Bereich mit einer unteren Grenze von 1 Stunde und einer oberen Grenze von 16 Stunden wiederum abgegeben haben und so das gesamte Schaumstoffelement die Gleichgewichtsfeuchte bezüglich der Umgebungsatmosphäre angenommen haben. Dies bedeutet, dass die Zellulose die darin gespeicherte Feuchtigkeit nach der Beendigung der Benutzung sehr rasch an die Umgebungsatmosphäre abgibt und dadurch eine Trocknung des Schaumstoffelements erfolgt.

Wie bereits einleitend erwähnt, wird dann von einer Gleichgewichtsfeuchte gesprochen, wenn das Schaumstoffelement einer der zuvor beschriebenen Umgebungsatmosphären so lange ausgesetzt ist, bis der Feuchtigkeitswert des Schaumstoffelements (Schaumfeuchtigkeit) im Gleichgewicht mit dem in der Umgebungsatmosphäre enthaltenen Feuchtigkeitswert ist. Bei Erreichen der Gleichgewichtsfeuchte findet dann kein gegenseitiger Austausch an Feuchtigkeit zwischen dem Schaumstoffelement und der das Schaumstoffelement umgebenden Umgebungsatmosphäre mehr statt.

So kann die zuvor beschriebene Prüfmethode beispielsweise derart durchgeführt werden, dass das Schaumstoffelement der ersten Umgebungsatmosphäre mit dem ersten Klima mit der vorbestimmten Temperatur und relativen Luftfeuchtigkeit, wie z.B. 20°C und 55 % r.F.; so lange ausgesetzt ist, bis die Gleichgewichtsfeuchte mit dieser Umgebungsatmosphäre erreicht ist und anschließend das gleiche Schaumstoffelement einer zweiten, zur ersten Umgebungsatmosphäre geänderten bzw. unterschiedlichen Umgebungsatmosphäre ausgesetzt wird. Diese zweite Umgebungsatmosphäre weist ein zweites Klima mit einer bezüglich des ersten Klimas höheren Temperatur und/oder höheren relativen Luftfeuchtigkeit, wie z.B. 23 °C und 93 % r.F., auf. Dabei steigt der Wert der Schaumfeuchtigkeit an, wobei die Feuchtigkeit von der im Schaumstoff eingelagerten Zellulose aufgenommen wird. Anschließend wird das gleiche Schaumstoffelement wiederum der ersten Umgebungsatmosphäre ausgesetzt, wobei dann nach dem zuvor angegebenen Zeitraum zwischen 1 Stunde und 16 Stunden wiederum der Ausgangswert der Schaumfeuchtigkeit entsprechend der Gleichgewichtsfeuchte bezüglich der ersten Umgebungsatmosphäre erreicht ist. So wird innerhalb dieser Zeitspanne die zuvor in der zweiten Umgebungsatmosphäre aufgenommene Feuchtigkeit von der Zellulose wiederum an die Umgebungsatmosphäre abgegeben und damit reduziert.

Der hier angegebene untere Wert von 1 Stunde ist von der Menge der aufgenommenen Flüssigkeit bzw. Feuchte abhängig und kann aber auch wesentlich darunter liegen und auch nur einige Minuten betragen.

Unabhängig von den zuvor beschriebenen sphärischen Zellulosepartikeln ist es auch noch möglich, die Zellulose in Form von Faserschnitt mit einer Faserlänge in einer unteren Grenze von 0,1 mm und einer oberen Grenze von 5 mm zu bilden. Gleichfalls wäre es aber auch noch möglich, dass die Zellulose in Form von gemahlenen Fasern mit einer Partikelgröße in einer unteren Grenze von 50 µm und einer oberen Grenze von 0,5 mm gebildet sind.

Der herzustellende Schaumstoff weist je nach Anwendungsfall unterschiedliche Schaumstoffeigenschaften auf, die durch die verschiedensten physikalischen Eigenschaften gekennzeichnet sind. So kann beispielsweise das Raumgewicht eine untere Grenze von 14 kg/m³ und eine obere Grenze von 100 kg/m³ aufweisen. Die Stauchhärte bei 40 % Drückung kann eine untere Grenze von 1,0 kPa, bevorzugt 2,5 kPa, und eine obere Grenze von 10,0 kPa, bevorzugt 3,5 kPa, aufweisen. Die Elastizität beim Fallkugeltest kann einen Wert mit einer unteren Grenze von 5 % und einer oberen Grenze von 70 % aufweisen. Dieser Wertebereich kann aber auch zwischen einer unteren Grenze von 25 %, bevorzugt 35 %, und einer oberen Grenze von 60%, bevorzugt 50% liegen. Dieses Prüfverfahren wird gemäß der Norm EN ISO 8307 durchgeführt und dabei die Rücksprunghöhe und damit verbunden die Rückprallelastizität ermittelt.

Handelt es sich bei dem hergestellten Schaumstoffelement um eines aus einem Polyurethan-Schaumstoff, insbesondere einem Weichschaumstoff, kann dieser sowohl auf der Basis TDI als auch auf der Basis von MDI hergestellt werden. Es können aber auch andere Schaumstoffe wie beispielsweise Polyethylenschaum, Polystyrolschaum, Polycarbonatschaum, PVC-Schaum, Polyimidschaum, Silikonschaum, PMMA (Polymethylmethacrylat) - Schaum, Kautschukschaum, Anwendung finden, welche ein Schaumgerüst ausbilden, in welches die Zellulose eingelagert werden kann. Je nach dem gewählten Schaumstoff-Werkstoff kann dann von einem Kunststoffschaum oder aber auch von einem Kautschukschaum, wie z.B. Latexschaum gesprochen werden. Die hohe Feuchtigkeitsaufnahme ist dabei unabhängig vom Rohstoffsystem sowie nach welchem Verfahren der Schaumstoff hergestellt wird, da die reversible Feuchtigkeitsaufnahmefähigkeit durch die Einarbeitung bzw. Einbettung der Zellulose erzielt wird. Bevorzugt werden offenzellige Schaumstofftypen eingesetzt, die einen ungehinderten Luftaustausch mit der Umgebungsatmosphäre ermöglichen. Gleichfalls ist auch eine homogene Verteilung der dem Schaumgerüst zugesetzten Zellulose wesentlich, wie dies bei den zuvor durchgeführten Versuchen bereits beschrieben worden ist. Sollte kein offenzelliges Schaumgerüst vorliegen, kann dieses durch gezielte und bekannte Nachbehandlungen offenzellig ausgebildet werden.

Wird als Ausgangsmaterial Polyol als eine der Reaktionskomponenten verwendet, kann dort die Zellulose vor dem Verschäumen hinzugesetzt werden. Die Zugabe kann durch Einrühren bzw. Dispergieren der Zellulose nach denen in der Branche bekannten Methoden erfolgen. Als Polyol fungiert jenes, das für den entsprechenden Schaumstofftyp notwendig ist und wird in rezeptnotwendiger Menge eingesetzt. Dabei ist jedoch noch der Feuchtegehalt der Zellulosepartikel bei der Erstellung der Rezeptur zu berücksichtigen.

Wie bereits zuvor beschrieben werden bevorzugt die Partikel 11 vor dem Aufschäumvorgang in eine den Kunststoffschaum bildende Komponente eingebracht bzw. damit versetzt. Um eine gleichmäßige Verteilung innerhalb des zumeist flüssigen Grundmaterials zu erreichen, ist es vorteilhaft, wenn die Differenz zwischen dem Raumgewicht bzw. der Dichte der Partikel 11 und dem zur Bildung des Kunststoffschaums verwendeten Ausgangsmaterial, wie beispielsweise dem Polyol, in einem Bereich von ± 10 % bevorzugt ±0,5 % bis ±3,0 % liegt. Besonders vorteilhaft ist es, wenn die Partikel 11 sowie das zur Bildung des Kunststoffschaums verwendete Ausgangsmaterial, wie beispielsweise das Polyol, jeweils ein Raumgewicht bzw. eine Dichte aufweisen, das bzw. die zueinander annähernd gleich ist. Dadurch wird ein unbeabsichtigtes Absinken und damit verbunden eine gleichmäßige Verteilung der Partikel 11 innerhalb des herzustellendes Kunststoffschaums erzielt.

Aus qualitativen Gründen ist für den momentan geplanten Einsatz im Matratzenbereich ein Raumgewicht ab 45 kg/m³ und darüber hinaus vorgesehen.

Das Polyol wird mittels Förderpumpen mit einer Fördermenge von 60 kg/min bis 150 kg/min und einer Temperatur zwischen 18° C und 30° C dem Mischbehälter zugeführt. Die bereitgestellte Menge des Polyols ist sehr genau einzuhalten, damit die beizumischenden Partikel 11, insbesondere die Zellulose, in einem definierten Mischverhältnis zugegeben werden können. Das Mischungsverhältnis von Polyol zu Partikeln 11 beträgt 5 Teile + 1 Teil bis hin zu 2 Teile + 1 Teil. Der Eintrag der Partikel 11 erfolgt mit einer langsam laufenden, geerdeten Förderschnecke, da der ganze Mischbereich in einer explosionsgeschützten Umgebung liegt. Ein Gemisch aus den Partikeln 11, insbesondere dem Pulver aus Zellulose, mit Luft ergibt bei einem bestimmten Mischungsverhältnis einen explosiven Staub.

Die Eintragsmenge der Partikel 11, wie das Zellulose - Pulver, in das Polyol ist mit 3 kg/min bis 6 kg/min festgelegt, damit eine kontinuierliche Einstreuung im Trombenbereich des Dissolvers eine agglomeratfreie Dispersion ergibt. Die Dauer der Umwälzung der fertigen Dispersion beträgt zwischen 10 Minuten und 20 Minuten. Für die optimale Nukleierung wird die Dispersion mit einem Vakuum von -0,6 bar über eine Zeitdauer von 3 Minuten entgast. Eine ungünstige Gasbeladung der Mischung führt ansonsten zu Störungen bei der Schaumstoffproduktion.

Einen maßgeblichen Faktor spielt auch der Zeitpunkt der Verarbeitung nach der Dispergierung. So ist die Verarbeitung innerhalb eines Zeitraumes zwischen einer und drei Stunden durchzuführen. Wird der Verarbeitungszeitpunkt nicht innerhalb dieses Zeitraumes gewählt, dann kann die Dichte (kg/m³) des herzustellenden Schaumstoffes nicht eingehalten werden und unterliegt somit starken Abweichungen.
Das durch das Mischen erwärmte Material wird wieder auf eine Verarbeitungstemperatur zwischen 20°C und 25°C zurückgeführt. Ab jetzt ist die Polyol - Partikel Dispersion bereit zur Verarbeitung auf der Schäummaschine.

Bei der Rezepturerstellung für den herzustellenden Schaumstoff sind auch noch die aktuellen Wetterdaten, wie der Luftdruck und die relative Luftfeuchtigkeit, zu berücksichtigen. Weiters wird die Feuchte des bereitgestellten Zellulose - Pulvers in die Berechnung der Komponenten miteinbezogen. Auch die Rohstofftemperatur wird für die geeignete Cremezone des zu verschäumenden Gemisches berücksichtigt. Ein "unterschäumen" führt zu Defekten im Blockinneren. Durch eine Änderung der beigefügten Aminmenge kann dies verhindern werden.

Durch die Einstellung des Zinn - Katalysators wird die Offenzelligkeit reguliert und ermöglicht so die Herstellung von rissfreien Blöcken. So kann eine qualitativ optimale Schaumstoffqualität erreicht werden.

Die Variation des Mischkammerdruckes zwischen 1,1 bar und 1,8 bar bewirkt die Änderung der Porengröße, um die gewünschte Schaumstruktur zu erzielen.

Einen weiteren wichtigen Faktor für den idealen Aufschäumprozess stellt die Transportbandgeschwindigkeit in Kombination mit der Ausstoßmenge dar. So beträgt die Vorschubgeschwindigkeit zwischen 2 m/min und 5 m/min bei einer Ausstoßmenge zwischen 60 kg/min und 150 kg/min.

Die Verwendung der "Planiblock-Einrichtung" bringt neben optimal rechteckig ausgebildeten Blöcken auch eine gleichmäßige Verteilung der Härte, des Raumgewichts sowie der Partikel 11, insbesondere der Zellulose über den Querschnitt bzw. das Volumen des gesamten Schaumstoffblockes.

Das Ausreifen und Abkühlen der geschäumten Blöcke erfolgt in vor Witterungseinflüssen geschützten Lagerräumen. Entsprechend lange Abkühlzeiten von zumindest zwanzig Stunden ergeben beste Qualitäten.

Diese Rohblöcke mit den eingelagerten Partikeln 11 werden anschließend an die Lagerung der weitern Verarbeitung zugeführt. Die im Schaumstoff enthaltenen Partikel 11 beeinflussen die Weiterverarbeitung des Schaumstoffes in keiner Weise.

Bevorzugter Weise wird der Schaumstoff mit umlaufenden Bandmessern auf den unterschiedlichsten Maschinen geschnitten. Neben einfachen geraden Schnitten auf Horizontalschneidemaschinen und Vertikalschneidemaschinen sind auch komplizierte Formen in zwei- und dreidimensionaler Richtung auf CNC-Kopierautomaten und Formschneidemaschinen möglich.

Weiters kann es sich als vorteilhaft erweisen, wenn dem Schaumstoff, insbesondere dem Kunststoffschaum, und/oder den Partikeln 11 und/oder der Beschichtung 12 der Werk- bzw. Wirkstoff Aloe-Vera beigefügt ist. Dies kann beispielsweise dadurch erfolgen, dass bereits einem der Grund- bzw. Ausgangsmaterialen zur Bildung des Schaumstoffs, insbesondere des Kunststoffschaums, und/oder der Partikel 11 und/oder der Beschichtung 12 der Werk- bzw. Wirkstoff bereits für den Herstellvorgang beigemischt bzw. beigefügt und damit versetzt wird. Unabhängig davon wäre es aber auch noch möglich, den Werk- bzw. Wirkstoff Aloe-Vera nachträglich auf den Schaumstoff, insbesondere den Kunststoffschaum, und/oder die Partikel 11 und/oder die Beschichtung 12 durch unterschiedlichste bekannte Verfahren aufzubringen. Dies könnte beispielsweise durch einen Sprühvorgang bzw. einen Tränkvorgang in einem Tauchbecken erfolgen.

Das Schaumstoffelement kann zur Bildung von einzelnen Schaumstofferzeugnissen, insbesondere aus Kunststoff, dienen, wobei das Erzeugnis ausgewählt ist aus der Gruppe umfassend Matratzen, Sitze oder Sitzteile für Fahrzeuge wie Autos, Züge, Straßenbahnen, Flugzeuge, Campingmöbel, Verkleidungsteile für Fahrzeuge wie Türverkleidungen, Dachhimmel, Kofferraumauskleidungen, Motorraumauskleidungen, Schuhsohlen und weitere Teile von Schuhen wie Schuheinlagen, Schuheinsätze, Polster für Tragegurte, Helmpolster, Möbelpolster, Kissen, Polsterungen für medizinische Verbände.

Die Ausführungsbeispiele zeigen mögliche Ausführungsvarianten des Schaumstoffelements mit einem im Kunststoffschaum eingelagerten hydrophilen Mittel, welches durch Zellulose gebildet ist, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Die den eigenständigen erfinderischen Lösungen zugrunde liegende Aufgabe kann der Beschreibung entnommen werden.

### Bezugszeichenaufstellung

- 1: Diagrammlinie
- 2: Diagrammlinie
- 3: Diagrammlinie
- 4: Diagrammlinie
- 5: Diagrammbalken

- 6: Diagrammbalken
- 7: Schaumstoffelement
- 8: Zelle
- 9: Zellwand
- 10: Zellsteg

- 11: Partikel
- 12: Beschichtung

## Patentansprüche

1. Schaumstoffelement (7) aus einem Schaumstoff und Partikel (11) aus zumindest einem hydrophilen Mittel, wobei das die Partikel (11) enthaltende Schaumstoffelement (7) eine reversible Feuchtigkeitsaufnahmefähigkeit aufweist und ein Teil der Partikel (11) vollständig im Schaumstoff eingebettet und ein weiterer Teil der Partikel (11) über eine Oberfläche (13), wie Zellwände (9) oder Zellstege (10), des Schaumstoffs vorragend angeordnet ist, **dadurch gekennzeichnet, dass** die Partikel (11) aus Zellulose gebildet und aus einem Strukturtyp der Kristallmodifikation von Zellulose - II gewählt sind.

2. Schaumstoffelement (7) nach Anspruch 1, **dadurch gekennzeichnet, dass** das mit den Partikeln (11) versetzte Schaumstoffelement (7) bei einer Eindrucktiefe von 40 % eine Stauchhärte mit einer unteren Grenze von 1 kPa, bevorzugt 2,5 kPa, und einer oberen Grenze von 10 kPa, bevorzugt 3,5 kPa aufweist.

3. Schaumstoffelement (7) nach Anspruch 1 oder 2, **dadurch gekennzeichnet, dass** das mit den Partikeln (11) versetzte Schaumstoffelement (7) eine Elastizität beim Fallkugeltest nach EN ISO 8307 mit einer unteren Grenze von 5 % und einer oberen Grenze von 70 % aufweist.

4. Schaumstoffelement (7) nach einem der Ansprüche 1 bis 3, **dadurch gekennzeichnet, dass** das Raumgewicht bzw. die Dichte des mit den Partikeln (11) versetzen Schaumstoffs größer 45 kg/m³ ist.

5. Schaumstoffelement (7) nach einem der Ansprüche 1 bis 4, **dadurch gekennzeichnet, dass** die Zellulose in Form von Faserschnitt mit einer Faserlänge mit einer unteren Grenze von 0,1 mm und einer oberen Grenze von 5 mm gebildet ist.

6. Schaumstoffelement (7) nach einem der Ansprüche 1 bis 5, **dadurch gekennzeichnet, dass** die Zellulose in Form von gemahlenen Fasern mit einer Partikelgröße mit einer unteren Grenze von 50 µm und einer oberen Grenze von 0,5 mm gebildet ist.

7. Schaumstoffelement (7) nach einem der Ansprüche 1 bis 4, **dadurch gekennzeichnet, dass** die Zellulose durch annähernd sphärische Zellulosepartikel gebildet ist.

8. Schaumstoffelement (7) nach Anspruch 7, **dadurch gekennzeichnet, dass** die Zellulosepartikel eine Partikelgröße mit einer unteren Grenze von 1 µm und einer oberen Grenze von 400 µm aufweisen.

9. Schaumstoffelement (7) nach Anspruch 7 oder 8, **dadurch gekennzeichnet, dass** die Zellulosepartikel eine Partikelgröße in einem Bereich mit einer unteren Grenze von 1 µm und einer oberen Grenze von 400 µm bei einer mittleren Partikelgröße x50 mit einer unteren Grenze von 4 µm, insbesondere 50 µm, und einer oberen Grenze von 250 µm, insbesondere 100 µm, bei einer monomodalen Partikelgrößenverteilung aufweisen.

10. Schaumstoffelement (7) nach einem der Ansprüche 1 bis 9, **dadurch gekennzeichnet, dass** ein Anteil der Zellulose bezüglich der gesamten Masse des Schaumstoffs mit einer unteren Grenze von 0,1 Gew. %, insbesondere 5 Gew. %, und einer oberen Grenze von 25 Gew. % , insbesondere 20 Gew. %, gewählt ist.

11. Schaumstoffelement (7) nach einem der Ansprüche 1 bis 10, **dadurch gekennzeichnet, dass** die Zellulose Zusatzstoffe aus der Gruppe umfassend Pigmente, anorganische Substanzen wie Titanoxid, unterstöchiometrisches Titanoxid, Bariumsulfat, Ionenaustauscher, Polyethylen, Polypropylen, Polyester, Ruß, Zeolithe" Aktivkohle, polymere Superabsorber und Flammschutzmittel enthält.

12. Schaumstoffelement (7) nach einem der vorhergehenden Ansprüche, **dadurch gekennzeichnet, dass** die Partikel (11) aus Holzmaterialien gebildet sind und die Partikelgröße kleiner 400 µm ist.

13. Schaumstoffelement (7) nach Anspruch 12, **dadurch gekennzeichnet, dass** die Partikel (11) aus Holzmaterialien mit einem die Fäulnis hemmenden Mittel beschichtet, insbesondere damit getränkt, sind.

14. Schaumstoffelement (7) nach einem der vorhergehenden Ansprüche, **dadurch gekennzeichnet, dass** die Partikel (11) mit einer Beschichtung versehen sind, die eine hohe Feuchtigkeits- bzw. Wasserdampfdurchlässigkeit aufweist.

15. Schaumstoffelement (7) nach einem der vorhergehenden Ansprüche, **dadurch gekennzeichnet, dass** die Differenz zwischen dem Raumgewicht bzw. der Dichte der Partikel (11) und dem zur Bildung des Kunststoffschaums verwendeten Polyols in einem Bereich von +/- 10 %, bevorzugt +/- 0,5 % bis +/- 3,0 % liegt.

16. Schaumstoffelement (7) nach einem der vorhergehenden Ansprüche, **dadurch gekennzeichnet, dass** die Partikel (11) sowie das zur Bildung des Kunststoffschaums verwendete Polyol jeweils ein Raumgewicht bzw. eine Dichte aufweisen, das bzw. die zueinander annähernd gleich ist.

17. Schaumstoffelement (7) nach einem der vorhergehenden Ansprüche, **dadurch gekennzeichnet, dass** dem Schaumstoff und/oder den Partikeln (11) der Wirkstoff Aloe-Vera beigefügt ist.

18. Schaumstoffelement (7) nach Anspruch 3, **dadurch gekennzeichnet, dass** der mit den Partikeln (11) versetzte Schaumstoff eine Elastizität beim Fallkugeltest nach EN ISO 8307 mit einer unteren Grenze von 25 %, bevorzugt 35 % und einer oberen Grenze von 60 %, bevorzugt 50 %, aufweist.

19. Schaumstoffelement (7) nach einem der vorhergehenden Ansprüche, **dadurch gekennzeichnet, dass** der Schaumstoff aus der Gruppe von Polyurethanschaum (PU-Schaum), Polyethylenschaum, Polystyrolschaum, Polycarbonatschaum, PVC-Schaum, Polyimidschaum, Silikonschaum, PMMA (Polymethylmethacrylat) - Schaum, Kautschukschaum gewählt ist.

20. Schaumstoffelement (7) nach Anspruch 19, **dadurch gekennzeichnet, dass** der Schaumstoff eine offenzellige Schaumstruktur aufweist.

21. Verwendung eines Schaumstoffelements (7) nach einem der Ansprüche 1 bis 20 zur Bildung eines Schaumstofferzeugnisses, wobei das Schaumstofferzeugnis ausgewählt ist aus der Gruppe umfassend Matratzen, Sitze oder Sitzteile für Fahrzeuge wie Autos, Züge, Straßenbahnen, Flugzeuge, Campingmöbel, Verkleidungsteile für Fahrzeuge wie Türverkleidungen, Dachhimmel, Kofferraumauskleidungen, Motorraumauskleidungen, Schuhsohlen und weitere Teile von Schuhen wie Schuheinlagen, Schuheinsätze, Polster für Tragegurte, Helmpolster, Möbelpolster, Kissen, Polsterungen für medizinische Verbände.

## Claims

1. A foam element (7) made from a foam and particles (11) of at least one hydrophilic substance, wherein
the foam element (7) containing the particles (11) has a reversible capacity to absorb moisture, and a portion of the particles (11) is completely embedded in the foam, and a further portion of the particles (11) is arranged protruding from a surface (13) of the foam, such as cell walls (9) or cell webs (10),
**characterised in that**
the particles (11) are formed from cellulose and are selected from a structure type based on the crystal modification of cellulose-II.

2. The foam element (7) according to claim 1, **characterised in that** the foam element (7) containing the particles (11) at a penetration depth of 40% has a compression hardness with a lower limit of 1 kPa, preferably 2.5 kPa, and an upper limit of 10 kPa, preferably 3.5 kPa.

3. The foam element (7) according to claim 1 or 2, **characterised in that** in the drop ball test in accordance with EN ISO 8307 the foam element (7) containing the particles (11) has an elasticity with a lower limit of 5% and an upper limit of 70%.

4. The foam element (7) according to one of the claims 1 to 3, **characterised in that** the weight by volume, or density of the foam containing the particles (11) is greater than 45 kg/m³.

5. The foam element (7) according to one of the claims 1 to 4, **characterised in that** the cellulose is formed in terms of cut fibres with a fibre length with a lower limit of 0.1 mm and an upper limit of 5 mm.

6. The foam element (7) according to one of the claims 1 to 5, **characterised in that** the cellulose is formed in terms of ground fibres with a particle size with a lower limit of 50 µm and an upper limit of 0.5 mm.

7. The foam element (7) according to one of the claims 1 to 4, **characterised in that** the cellulose is formed in terms of approximately spherical cellulose particles.

8. The foam element (7) according to claim 7, **characterised in that** the cellulose particles have a particle size with a lower limit of 1 µm and an upper limit of 400 µm.

9. The foam element (7) according to claim 7 or 8, **characterised in that** the cellulose particles have a particle size in a range with a lower limit of 1 µm and an upper limit of 400 µm, with an average particle size x50 with a lower limit of 4 µm, in particular 50 µm, and an upper limit of 250 µm, in particular 100 µm, with a monomodal particle size distribution.

10. The foam element (7) according to one of the claims 1 to 9, **characterised in that** with reference to the total mass of the foam a proportion of the cellulose is selected with a lower limit of 0.1% by weight, in particular 5% by weight, and an upper limit of 25% by weight, in particular 20% by weight.

11. The foam element (7) according to one of the claims 1 to 10, **characterised in that** the cellulose contains additives from the group comprising pigments, inorganic substances such as titanium oxide, sub-stoichiometric titanium oxide, barium sulphate, ion exchangers, polyethylene, polypropylene, polyester, carbon black, zeolites, active carbon, polymeric super absorbers, and flame retardants.

12. The foam element (7) according to one of the preceding claims, **characterised in that** the particles (11) are formed from timber materials, and the particle size is less than 400 µm.

13. The foam element (7) according to claim 12, **characterised in that** the particles (11) of timber materials are coated with a decay-inhibiting agent, in particular are impregnated with the latter.

14. The foam element (7) according to one of the preceding claims, **characterised in that** the particles (11) are provided with a coating, which has a high permeability to moisture or water vapour.

15. The foam element (7) according to one of the preceding claims, **characterised in that** the difference between the weight by volume, or density of the particles (11) and the polyols used to form the plastic foam lies in a range of +/- 10 %, preferably +/- 0.5 % to +/-3.0%.

16. The foam element (7) according to one of the preceding claims, **characterised in that** the particles (11) as well as the polyol used to form the plastic foam, in each case have a weight by volume, or density, which is approximately equal to each other.

17. The foam element (7) according to one of the preceding claims, **characterised in that** the active substance aloe vera is added to the foam and/or the particles (11).

18. The foam element (7) according to claim 3, **characterised in that** in the drop ball test in accordance with EN ISO 8307 the foam containing the particles (11) has an elasticity with a lower limit of 25 %, preferably 35%, and an upper limit of 60 %, preferably 50%.

19. The foam element (7) according to one of the preceding claims, **characterised in that** the foam is selected from the group of polyurethane foam (PU-foam), polyethylene foam, polystyrene foam, polycarbonate foam, PVC-foam, polyamide foam, silicon foam, PMMA (polymethyl methacrylate) foam, natural rubber foam.

20. The foam element (7) according to claim 19, **characterised in that** the foam has an open cell foam structure.

21. The use of a foam element (7) according to one of the claims 1 to 20 for the formation of a foam product, wherein the foam product is selected from the group comprising mattresses, seats or seat parts for vehicles such as cars, trains, trams, aircraft, camping furniture, trim parts for vehicles such as door panels, roof linings, boot linings, engine compartment linings, shoe soles and other parts of shoes such as shoe inlays, shoe inserts, cushions for carrying straps, helmet pads, furniture upholstery, cushions, paddings for medical dressings.

## Revendications

1. Elément en mousse (7) fabriqué à partir d'une mousse et de particules (11) d'au moins une substance hydrophile, dans lequel l'élément en mousse (7) comprenant les particules (11) présente une capacité réversible à absorber l'humidité, et une partie des particules (11) est intégrée complètement dans la mousse, et une autre partie des particules (11) est disposée en saillie d'une surface (13) de la mousse, telle qu'une paroi de cellule (9) ou un tissu de cellule (10), **caractérisé en ce que** les particules (11) sont constituées de cellulose, et sont sélectionnées dans un type de structure basé sur une modification cristalline de la cellulose-II.

2. Elément en mousse (7) selon la revendication 1, **caractérisé en ce que** l'élément en mousse (7) comprenant les particules (11) présente une dureté en compression à une profondeur de compression de 40 % avec une limite inférieure de 1 kPa, de préférence 2,5 kPa, et une limite supérieure de 10 kPa, de préférence 3,5 kPa.

3. Elément en mousse (7) selon la revendication 1 ou 2, **caractérisé en ce que** l'élément en mousse (7) comprenant les particules (11) présente une élasticité basée sur l'essai de chute de bille conformément à la norme EN ISO 8307 avec une limite inférieure de 5 % et une limite supérieure de 70 %.

4. Elément en mousse (7) selon l'une quelconque des revendications 1 à 3, **caractérisé en ce que** le poids par volume ou la densité de l'élément en mousse comprenant les particules (11) est supérieur à 45 kg/m³.

5. Elément en mousse (7) selon l'une quelconque des revendications 1 à 4, **caractérisé en ce que** la cellulose est réalisée sous la forme de fibres coupées avec une longueur de fibre ayant une limite inférieure de 0,1 mm et une limite supérieure de 5 mm.

6. Elément en mousse (7) selon l'une quelconque des revendications 1 à 5, **caractérisé en ce que** la cellulose est réalisée sous la forme de fibres broyées avec une taille de particule ayant une limite inférieure de 50 µm et une limite supérieure de 0,5 mm.

7. Elément en mousse (7) selon l'une quelconque des revendications 1 à 4, **caractérisé en ce que** la cellulose est réalisée sous la forme de particules de cellulose approximativement sphériques.

8. Elément en mousse (7) selon la revendication 7, **caractérisé en ce que** les particules de cellulose présentent une taille de particule avec une limite inférieure de 1 µm et une limite supérieure de 400 µm.

9. Elément en mousse (7) selon la revendication 7 ou 8, **caractérisé en ce que** les particules de cellulose présentent une taille de particule dans une plage ayant une limite inférieure de 1 µm et une limite supérieure de 400 µm, avec une plage de taille de particule moyenne x 50 ayant une limite inférieure de 4 µm, en particulier 50 µm, et une limite supérieure de 250 µm, en particulier 100 µm, et une distribution de tailles de particules monomodale.

10. Elément en mousse (7) selon l'une quelconque des revendications 1 à 9, **caractérisé en ce qu'**une proportion de la cellulose par rapport au poids total de la mousse est sélectionnée de sorte à se situer entre une limite inférieure de 0,1 % en poids, en particulier 5 % en poids, et une limite supérieure de 25 % en poids, en particulier 20 % en poids.

11. Elément en mousse (7) selon l'une quelconque des revendications 1 à 10, **caractérisé en ce que** la cellulose contient des additifs sélectionnés dans le groupe comprenant des pigments, des substances inorganiques telles que l'oxyde de titane, l'oxyde de titane sous-stoechiométrique, le sulfate de baryum, les échangeurs d'ions, le poly(éthylène), le poly(propylène), le poly(ester), le noir de charbon, la zéolite, le charbon actif, les superabsorbants polymères et les produits ignifuges.

12. Elément en mousse (7) selon l'une quelconque des revendications précédentes, **caractérisé en ce que** les particules (11) sont fabriquées à partir de matériaux en bois, et la taille de particule est inférieure à 400 µm.

13. Elément en mousse (7) selon la revendication 12, **caractérisé en ce que** les particules (11) des matériaux en bois sont revêtues d'une substance afin d'inhiber le pourrissement, en particulier sont imprégnées avec celle-ci.

14. Elément en mousse (7) selon l'une quelconque des revendications précédentes, **caractérisé en ce que** les particules (11) sont pourvues d'un revêtement qui présente une perméabilité élevée à l'humidité et à la vapeur d'eau.

15. Elément en mousse (7) selon l'une quelconque des revendications précédentes, **caractérisé en ce que** la différence entre le poids par volume ou la densité des particules (11) et le polyol utilisé pour fabriquer la mousse plastique se situe dans une plage de +/- 10 %, de préférence de +/- 0,5 % à +/- 3,0 %.

16. Elément en mousse (7) selon l'une quelconque des revendications précédentes, **caractérisé en ce que** les particules (11) et le polyol utilisés pour fabriquer la mousse plastique présentent un poids par volume ou une densité approximativement identique.

17. Elément en mousse (7) selon l'une quelconque des revendications précédentes, **caractérisé en ce que** de l'Aloe vera est ajouté à la mousse et/ou aux particules (11) en tant qu'ingrédient actif.

18. Elément en mousse (7) selon la revendication 3, **caractérisé en ce que** la mousse comprenant les particules (11) présente une élasticité mesurée par l'essai de chute de bille conformément à la norme EN ISO 8307 avec une limite inférieure de 25 %, de préférence 35 %, et une limite supérieure de 60 %, de préférence 50 %.

19. Elément en mousse (7) selon l'une quelconque des revendications précédentes, **caractérisé en ce que** la mousse est choisie dans un groupe comprenant de la mousse de polyuréthane (mousse PU), de la mousse de polyéthylène, de la mousse de polystyrène, de la mousse de polycarbonate, de la mousse PVC, de la mousse de polyimide, de la mousse de silicone, de la mousse de polyméthylmétacrylate (PMMA), et de la mousse de caoutchouc synthétique.

20. Elément en mousse (7) selon la revendication 19, **caractérisé en ce que** la mousse présente une structure de mousse à cellules ouvertes.

21. Utilisation d'un élément en mousse (7) selon l'une des revendications 1 à 20 pour fabriquer un produit, où le produit en mousse est sélectionné dans le groupe comprenant les matelas, les sièges ou pièces de siège pour véhicules tels que les automobiles, les trains, les tramways, les avions, les meubles de camping, les pièces de doublage pour les véhicules motorisés tels que les doublages de porte, les couvertures de toit, les doublages de compartiment à bagages, les doublages de compartiment moteur, les semelles de chaussure et autres pièces de chaussure telles que les semelles intérieures de chaussure, le matelassage de ceintures, le matelassage de casques, le rembourrage de meubles, les oreillers et coussins, les garnitures de pansements médicaux.
